(19) **Europäisches Patentamt**
**European Patent Office**
**Office européen des brevets**

(11) **EP 2 470 829 B1**

(12) **EUROPEAN PATENT SPECIFICATION**

(45) Date of publication and mention
of the grant of the patent:
**07.10.2015 Bulletin 2015/41**

(51) Int Cl.:
*F21V 15/01* (2006.01)      *F21V 19/00* (2006.01)
*F21V 23/04* (2006.01)      *F21V 29/00* (2015.01)
*F21K 99/00* (2010.01)      *F21Y 101/02* (2006.01)

(21) Application number: **10757655.5**

(22) Date of filing: **27.08.2010**

(86) International application number:
**PCT/US2010/046931**

(87) International publication number:
**WO 2011/025928 (03.03.2011 Gazette 2011/09)**

(54) **LIGHTING SYSTEM WITH REPLACEABLE ILLUMINATION MODULE**

BELEUCHTUNGSSYSTEME MIT AUSWECHSELBAREM BELEUCHTUNGSMODUL

SYSTÈME D'ÉCLAIRAGE À MODULE D'ÉCLAIREMENT REMPLAÇABLE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **28.08.2009 US 275401 P**

(43) Date of publication of application:
**04.07.2012 Bulletin 2012/27**

(73) Proprietor: **LED ILLUMINATION HOLDINGS LLC,
South Robinson TX 76706 (US)**

(72) Inventors:
• **BAILEY, Joel Brad
Austin
Texas 78750 (US)**
• **BARCIK, Stephen J.
Austin
Texas 78734 (US)**

• **KERNION, William J.
Pflugerville
Texas 78660 (US)**

(74) Representative: **Loven, Keith James
LOVEN Patents & Trademarks Limited
3 Checkpoint Court
Lincoln LN6 3PW (GB)**

(56) References cited:
EP-A1- 1 950 491         WO-A1-2006/063552
WO-A1-2008/146694        WO-A1-2009/104211
WO-A2-2009/093163        DE-U1-202008 004 620
JP-A- 2005 116 182       US-A1- 2005 276 053
US-A1- 2007 121 336      US-A1- 2008 218 993
US-A1- 2008 252 197      US-A1- 2009 097 249
US-A1- 2009 103 296      US-A1- 2009 184 619
US-A1- 2009 190 354

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Description

## BACKGROUND OF INVENTION

## Field of the Invention

The present invention relates to lighting, and more particularly, to a solid state lighting replacement for lighting devices or systems and its operation.

## Description of the Related Art

U.S. and international regulations call for phasing out existing lighting solutions, such as incandescent light bulbs, fluorescent lamps, and electrical ballasts. As a result, the light emitting diode (LED) and solid state lighting industry is growing rapidly. Industry and end users are calling for LEDs to be replacements for traditional lighting systems, such as those associated with traffic control signals and automobile brake lights, among others. The replacement of conventional incandescent light bulbs with one or more LEDs is desirable because incandescent bulbs are inefficient relative to LEDs in terms of energy efficiency, heat management, and longevity.

The LED is a lighting device made of semiconductor p-n junction diodes. A LED generally includes a diode fabricated onto a semiconductor die which receives electrical power from a power source and supplies power to the diode. To produce a brighter LED, generally more power is delivered to the LED. Modules composed of many LEDs are used in many applications such as flat screen displays and other devices to provide illumination. LEDs have been used for decades in applications requiring relatively low-energy indicator lamps, numerical readouts, and the like. LED modules were originally produced for use as direct substitutes for standard LED lamps. However, due to their unique shape, size, and power consumption requirements, they present manufacturing and assembly difficulties that were originally unanticipated by LED manufacturers, resulting in generally bulky and non-serviceable components. Additionally, removal and replacement of LEDs in an LED module is often costly, cumbersome, impossible, and/or time consuming. Despite the prevalence of their use, LEDs and LED modules have well known disadvantages and limitations.

Prior art solutions exhibit significant shortcomings from a performance and price point standpoint. Complexities of heat removal from LED packages and overall thermal management difficulties result in manufacturers de-rating the luminous output of lamps to minimize heat loading. The result is reduced lumens output compared to the equivalent incandescent lamp. Some manufacturers attempt to solve the thermal management problem with complex and costly cast heat sink designs. This approach greatly increases design and manufacturing cost and drives the lamp cost to a non-competitive price point. Also, serious heat transfer or conduction problem arise when a plurality of densely packaged chips are used.

Currently known lighting systems have failed to assemble multiple LEDs in a compact fashion while maintaining the necessary heat transfer characteristics. Also, LED lighting systems dissipate heat by a different heat transfer path than ordinary filament bulb systems; more specifically, these higher power LED lighting systems dissipate a substantial amount of heat via a cathode (negative terminal) leg or through a die attached to a thermal slug in a direct die mount device. Consequently, the higher power LED systems tend to run at higher temperatures. Higher operation temperatures degrade the performance of the higher power LED lighting systems. Additionally, LED modules for use in a display or an illumination device have many LEDs, and most of the LEDs are driven at the same time, which results in a quick rise in temperature of the LED module. Consequently light output quality from the LED module is degraded with illumination and shows undesirable color shift, flicker, and reduced intensity. A substantial technical challenge to producing a reliable device based on LED light sources lies in packaging the light sources such that effective thermal management is realized. Excessive operating temperature of the light sources often results in premature failure.

Prior art solutions also exhibit significant shortcomings from the standpoint of upgradeablity, replaceablity, serviceablity, and modularity. In many typical mounting arrangements, LEDs are mounted in a mounting assembly or mount which is then soldered to a printed circuit board using surface mount assembly techniques. In such arrangements, to remove and replace a defective or burned out LED, to change out one LED or another, or to upgrade to an improved LED technology, it is necessary to heat the solder holding the original LED mount in place to its melting point and then to remove the original LED mount, clean the board, and then to resolder a replacement LED mount in its place. Alternatively, a whole new replacement board may be utilized to avoid the step of replacing the LED completely. Both of these approaches have their drawbacks with respect to ease of replacements, cost, efficiency, or the like.

Prior art solutions also exhibit significant shortcomings from the standpoint of cost and difficulty of manufacturing a heat sink for use in a LED illumination module. A major shortcoming of prior art heat sink design is that they are generally difficult to manufacture. Such heat sinks require enormously high production cycle time and tooling costs to manufacturer which, of course, makes them cost ineffective. The manufacturing techniques for heat sinks implemented in LED modules are die casting, die forging, precision sawing, electrical discharge machining, and numerically controlled machining. In some prior art solutions, a method of manufacturing a pin-finned heat sink from an extrusion is limited by what is obtainable by an extrusion process. Additionally, many manufacturers offer bonded fin heat sinks assemblies in which each fin in the assembly is individually bonded into a heat sink base. A major shortcoming of such heat sinks is their high cost. This cost is related directly to the labor required to individually arrange each fin on some sort of support or substrate and high production cycle time.

Prior art solutions also exhibit significant shortcomings from the standpoint of beam conditioning associated with lens and light-emitting assemblies for use in a LED illumination module. In many applications involving the use of semiconductor LEDs, it is desirable to condition the optical output of a light-emitting source to suit various objectives. In other applications, it is desirable to mix optical outputs from a plurality of light-emitting sources, such as LEDs of the three primary colors of red, green, and blue. The mixing of light from a plurality of LEDs, for example, LEDs emitting the three primary colors, is advantageous, since by separating the LEDs into a plurality of distributed locations and then by mixing light from a plurality of distributed sources, problems associated with a the high power dissipation and the consequential thermal loading of a high power discrete white LED can be alleviated. However, typical distribution characteristics of a typical LED means that a relatively large distance is generally be required for light mixing. Therefore, would be desirable to provide optical arrangements and beam conditioning for reducing the light mixing distance between a plurality of LEDs.

Prior art solutions also exhibit significant shortcomings from the standpoint of lack of intelligent control of a network of LED illumination modules. Existing lighting systems are limited in the sense that they have generally involved light sources coupled to a source of power via manually operated mechanical switches. The result is lack of automation control and intelligent control of various lighting scenarios. Furthermore, a network of lighting modules is highly inefficient in terms of intensity per unit of power consumed. Additionally, such a network of lighting devices is unable to effectively and efficiently produce desired hue and color variations. A significant problem with present lighting networks is that they require special wiring or cabling. In particular, one set of wires is needed for electrical power, while a second set of wires is needed for data, such as for protocol data. Another significant problem with present lighting network is that particular lighting applications require particular lighting types. For example, LED based lights are appropriate for some applications, while incandescent lights or halogen lamps may be more appropriate for other applications. A user who wishes to have a digitally controlled network of lights, in addition to rewiring, must currently add additional fixtures or replace old fixtures for each different type of light.

Accordingly, improved systems and methods for lighting are needed.

## Summary of the Invention

A system according to the preamble of claim 1 is known from US 2009/0097249

Described herein are embodiments of a lighting system and various methods of operation. Embodiments of the invention may, but are not required to, address one or more of the shortcomings described above.

The invention provides a system according to claim 1.

The lighting system may also comprise a wavelength sensor component for modulating color temperature output from the replaceable illumination module. The wavelength sensor component may be comprised in or electrically coupled to the replaceable illumination module. The lighting system may also or instead comprise an intensity sensor component that is comprised in or electrically coupled to the replaceable illumination module. The intensity sensor component may be configured to modulate light intensity output from the replaceable illumination module.

The lighting system may further comprise an active cooling element coupled to or comprised in the replaceable illumination module. The active cooling element may comprise one or more of a thermoelectric cooler, a phase-change device, a fan, a piezoelectric fan, a voice coil based flipper fan, a synthetic jet cooler, or an acoustically-driven cooler. The lighting system may also, or instead, comprise a passive cooling element coupled to or comprised in the replaceable illumination module. The passive cooling element comprises one or more of a heat pipe, a Venturi effect device, or a convective flow device.

The lighting system may comprise at least one sensor comprised in or coupled to the replaceable illumination module or the heat sink. The sensor may comprise, e.g., a photosensor, a color sensor, a light-intensity sensor, or a temperature sensor. The sensor may be configured to couple to an automated control network for regulation of color output, light-intensity output, or temperature in the replaceable illumination module by the automated control network. The sensor may also wirelessly couple to the automated control network. For example, the sensor may be a temperature sensor configured for use in sensing, feedback, and control of temperature in the replaceable illumination module. As another example, the sensor may be a wavelength sensor component for sensing and modulating color temperature output of the replaceable illumination module. As another example, the sensor may be an intensity sensor component for sensing and modulating light intensity output of the replaceable illumination module.

Embodiments of a method for use of a replaceable illumination module are also presented. The method may include providing a lighting device that includes a first replaceable illumination module and a base module as described above. When replacement is desired, the first replaceable illumination module may be removed (or detached) from the base module, and a second replaceable illumination module is installed (or attached) to the base module of the lighting device. After installation of the second replaceable illumination module, the lighting device provides illumination using the second replacement illumination module. Where the lighting device is inserted into a lighting socket, the lighting device may first be removed the socket before the replacement described above, and then may be re-inserted after replacement. Alternatively, the lighting device may remain inserted in the socket during the replacement.

In one embodiment, the replaceable illumination module also comprises one or more beam conditioning optical elements proximate to the one or more solid state lighting elements. The beam conditioning optical elements may be configured to modify light output from the solid state lighting elements to produce a specified beam. For example, the beam conditioning optical elements may be configured to control color temperature during operation of the replaceable illumination module.

In one exemplary method of operation, power is received to an electrical connector of the replaceable illumination module from an external power source and is provided to a printed circuit board of the replaceable illumination module via the connector. Power is then provided via the printed circuit board to the one or more solid state lighting elements. The solid state lighting elements emit light and also produce heat. The one or more beam conditioning optical elements transform at least a portion of the emitted light from the solid state lighting elements, e.g. by controlling color temperature. Also, the thermal spreading element conducts heat from the solid state lighting elements to the heat sink via the interface surface.

In one embodiment, at least one of the beam conditioning optical elements is configured to spectrally transform light from the one or more solid state lighting elements by absorbing photons with a first spectral distribution and emitting photons with a second spectral distribution. In this embodiment, the beam conditioning optical element may comprise one or more of a phosphor material, a nanophotonic material, a crystalline photonic material, an optical fiber material, a photonic crystal fiber material, an engineered microstructure material, or a dielectric waveguide material.

The one or more beam conditioning optical elements may comprise one or more beam forming elements that are configured to modify a spatial intensity distribution of the photons of the second spectral distribution for control of beam concentration and beam divergence. In this embodiment, the beam forming elements may comprise at least one of one or more reflective optical elements, one or more diffractive optical elements, or one or more refractive elements. Further, the beam forming elements may comprise one or more prism structures or one or more Fresnel lenses. The one or more refractive elements may comprise one or more lenses and/or one or more micro-lens arrays.

In one embodiment, as noted above, the lighting system comprises one or more sensors proximate to the one or more beam conditioning optical elements, and control circuitry coupled to the one or more sensors. The sensors may be a photosensor, a color sensor, and/or a light-intensity sensor. The control circuitry is configured to monitor spectral distribution or intensity distribution of spectrally transformed light from the one or more solid state lighting elements via the one or more sensors and modify at least one of the beam conditioning optical elements to control color temperature or intensity distribution of the beam. The control circuitry may be configured to couple to an automated control network (e.g., wirelessly) for regulation of color output or light-intensity output of the lighting system by the automated control network.

In one embodiment, at least two of the solid state lighting elements each comprises a respective specified spectral output, and at least one of the beam conditioning optical elements is configured to homogenize light output from the plurality of solid state lighting elements.

In one exemplary method of operation, power is received by the replaceable illumination module and provided via the printed circuit board to the one or more solid state lighting elements. The solid state lighting elements emit light and also produce heat. At least one of the beam conditioning optical elements spectrally transforms light from the one or more solid state lighting elements, e.g., by absorbing photons with a first spectral distribution and emitting photons with a second spectral distribution. In this embodiment, at least one beam conditioning optical element may comprise one or more of the materials or configurations mentioned above. Also, as noted above, the beam conditioning optical elements may comprise one or more beam forming elements that operate to modify a spatial intensity distribution of the photons of the second spectral distribution for control of beam concentration and beam divergence. Also, as noted above, the replacement illumination module may comprise a thermal spreading element that conducts heat from the solid state lighting elements to the heat sink via the interface surface.

In one embodiment, the replaceable illumination module is included in a controllable lighting system that comprises one or more sensors and control circuitry. The one or more sensors are coupled to or comprised in the replaceable illumination module and are configured to measure one or more attributes of the replaceable illumination module or its environment. For example, the sensors may be a light sensor, temperature sensor, pressure sensor, motion sensor, a smoke detector, a chemical sensor, or a carbon monoxide detector, etc. The control circuitry is coupled to or comprised in the replaceable illumination module and is configured to monitor the attributes to determine a status of the controllable lighting system via the one or more sensors. The control circuitry (or other control logic) uses the attributes and/or the determined status to regulate the controllable lighting system or control a system coupled to the controllable lighting system.

The one or more sensors may comprise a temperature sensor configured to measure temperature of the replaceable illumination module. The control circuitry may be configured to monitor the temperature via the temperature sensor and control the controllable lighting system to regulate the temperature. The control circuitry may regulate the temperature by deactivating or activating at least one of the solid state lighting elements or modifying power provided to the printed circuit board. The control circuitry may also regulate temperature by activating or deactivating at least one active cooling element, which may be any of various types as described above.

In one embodiment, as noted above, the controllable lighting system further comprises one or more beam conditioning optical elements proximate to the one or more solid state lighting elements. The beam conditioning optical elements may be configured in various manners as described above. The beam conditioning optical elements are configured to modify light output from the solid state lighting elements. A light sensor is coupled to detect the light output. The control circuitry is configured to monitor light emitted from the solid state lighting elements or ambient light via the light sensor and control the beam conditioning optical elements to generate a specified beam. As noted above, at least one of the beam conditioning optical elements is configured to spectrally transform light from the solid state lighting elements by absorbing photons with a first spectral distribution and emitting photons with a second spectral distribution. The beam conditioning optical elements may also be configured to modify a spatial intensity distribution of the beam.

In one embodiment, the controllable lighting system is comprised in a multi-zoned lighting system, and network control of the controllable lighting system comprises occupancy dependent zone control. In another embodiment, the controllable lighting system is comprised in or coupled to an alarm or notification system. For example, the system may comprise one or more of a video camera, a still camera, a motion sensor, a smoke detector, a chemical sensor, or a carbon monoxide detector.

The heat sink described herein may be constructed using any of various techniques. One embodiment of the invention includes a method for manufacturing a work piece, such as the heat sink described above. The method may comprise providing an extrusion die that is controllable to dynamically vary one or more cross sectional attributes of the work piece. The method may then comprise extruding a material via the extrusion die to generate the work piece. The extrusion process may comprise dynamically controlling the extrusion die to vary at least one cross sectional attribute of the work piece during the extruding. For example, dynamically controlling the extrusion die may comprise rotating the extrusion die to impart a twist to the work piece, heating the extrusion die, and/or varying a cross section of the extrusion die to taper the work piece. The extrusion process may also comprise thermally modifying the material. The generated work piece may have a variable longitudinal profile in accordance with the dynamically controlling performed during the extrusion process.

The method for manufacturing the work piece may comprise applying a braising paste or a furnace bake to the generated work piece. Also, after performing the extrusion process, the construction method may comprise thermally heating the work piece, compressing the work piece into a mold or a forming structure, or rotating the work piece into a mold or a forming structure. The forming structure may be fixed or articulated. Compression of the work piece may comprise forming one or more tapers or notches.

As noted above, in one embodiment the work piece is a heat sink that comprises at least one extrusion having a plurality of heat fins. The at least one extrusion may be tapered. Also, each heat fin may comprise a specified nonzero curvature. As noted above, the plurality of heat fins may be made of a material with a thermal conductivity of at least approximately 180 W/m-K. Also, the plurality of heat fins may be made to form a plurality of air flow channels for convectively dissipating heat to the surroundings. In one embodiment, as also noted above, the heat sink is constructed with a plurality of stacked extrusions, wherein each stacked extrusion has a respective radius. The plurality of stacked extrusions may be ordered in accordance with their respective radii to form a stepwise tapered heat sink. For at least one of the stacked extrusions, the heat fins of a first extrusion are not aligned with corresponding heat fins of at least one adjacent stacked extrusion. The method of constructing the heat sink may comprise utilizing a forming wheel to modify each of the plurality of heat fins.

An apparatus for constructing a work piece as described above may comprise a dynamically controllable extrusion die system having a controller and an extrusion die coupled to the controller. The controller is configured to dynamically control the extrusion die to generate the work piece. In other words, the controller may generate control signals that are provided to the extrusion die. The controller may dynamically control the extrusion die as described above, e.g., by varying at least one cross sectional attribute of the work piece, rotating the extrusion die to impart a twist to the work piece, heating the extrusion die, and/or varying a cross section of the extrusion die to taper the work piece. The extrusion process may also comprise thermally modifying the material. The generated work piece may have a variable longitudinal profile in accordance with the dynamically controlling performed during the extrusion process. Embodiments of the invention may also comprise a non-transitory memory medium that stores program instructions executable by a controller to dynamically control an extrusion die to extrude a material to generate a work piece as described herein.

These and other advantages of the disclosed subject matter, as well as additional novel features, will be apparent from the description provided herein. Various systems, methods, features and advantages here provided will become apparent to one with skill in the art upon examination of the following figures and detailed description. It is intended that all such additional systems, methods, features and advantages be included within this description, be within the scope of the accompanying claims.

## Brief Description of the Drawings

A better understanding of the present invention can be obtained when the following detailed description of the preferred embodiment is considered in conjunction with the following drawings, in which:

Figure 1 illustrates a lighting system, according to one embodiment;

Figure 2 illustrates one embodiment of a replaceable illumination module with an interface connection;

Figure 3 illustrates a functional decomposition of a replaceable illumination module with interface connection, according to one embodiment;

Figure 4 depicts conductive piers in a replaceable illumination module interface, according to one embodiment;

Figures 5 and 6 illustrate exemplary embodiments of a shaft and base connector assembly for coupling to a replaceable illumination module;

Figure 7 shows an embodiment of a lighting system module with an exemplary heat sink;

Figure 8 illustrates a heat sink, according to one embodiment;

Figure 9 displays an embodiment of a tapered extrusion formed by a dynamically controllable extrusion;

Figure 10 illustrates an embodiment of a heat sink formed by tapering and twisting an extrusion, according to one embodiment;

Figure 11 shows an exemplary lighting fixture in relation to a lighting system, according to one embodiment;

Figure 12 illustrates convective cooling enhancements to a replaceable illumination module of the present technique, according to one embodiment;

Figure 13 shows convective enhancements to a replaceable illumination module in relation to an exemplary lighting fixture, according to one embodiment;

Figure 14 illustrates an exemplary piezoelectric device for use in a replaceable illumination module, according to one embodiment;

Figure 15 shows an exemplary tube axial fan for use in a replaceable illumination module, according to one embodiment;

Figure 16 depicts an exemplary flexible illumination module, according to one embodiment;

Figure 17 portrays an Edison configuration in a replaceable illumination module, according to one embodiment;

Figure 18 shows a series and parallel combination replaceable chain, according to one embodiment;

Figure 19 illustrates bridge rectification, according to one embodiment;

Figure 20 illustrates an automated control system for lighting control, according to one embodiment;

Figure 21 depicts exemplary motion sensing in conjunction with an automated control system , according to one embodiment;

Figure 22 illustrates a smart light for use with an automated control system, according to one embodiment;

Figure 23 illustrates a method for use of the lighting system, according to one embodiment;

Figure 24 illustrates a method for operation of a replaceable illumination module, according to one embodiment;

Figure 25 illustrates a method for manufacturing a work piece via a dynamically controllable extrusion die, according to one embodiment;

Figure 26 illustrates a method for beam conditioning in the lighting system, according to one embodiment; and

Figure 27 illustrates a method for operating a controllable lighting system, according to one embodiment.

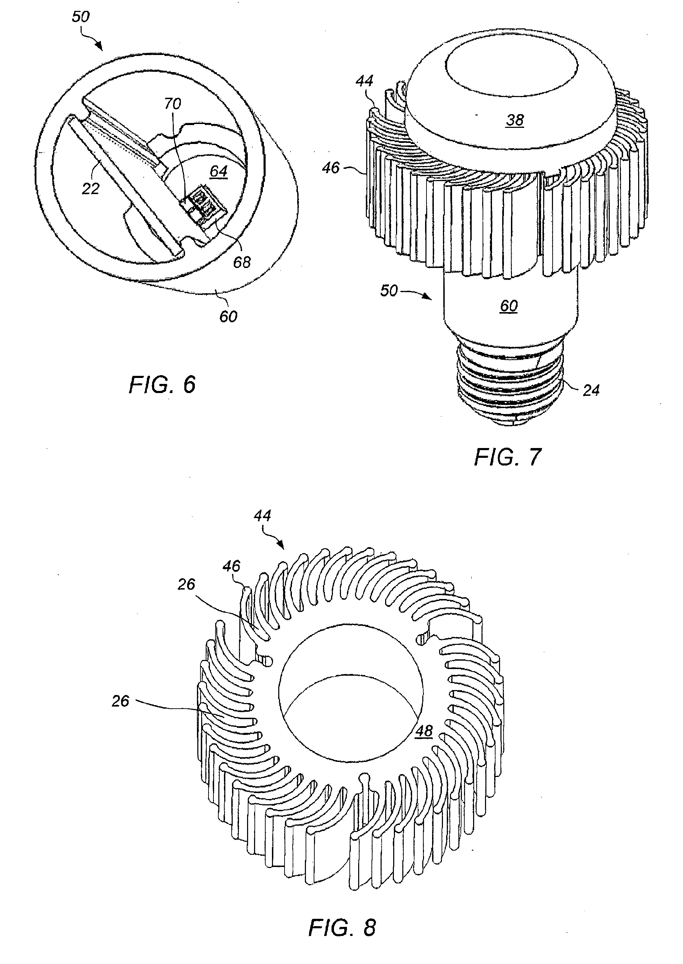

The embodiments of fig 7-10, 14 and 17 are not covered by the scope of claim 1.

While the invention is susceptible to various modifications and alternative forms, specific embodiments thereof are shown by way of example in the drawings and are herein described in detail. It should be understood, however, that the drawings and detailed description thereto are not intended to limit the invention to the particular form disclosed, but on the contrary, the intention is to cover all modifications, equivalents and alternatives falling within the spirit and scope of the present invention as defined by the appended claims.

## Detailed Description of the Invention

Terms

The following is a glossary of terms used in the present application:

**Memory Medium -** Any of various types of memory devices or storage devices. The term "memory medium" is intended to include an installation medium, e.g., a CD-ROM, floppy disks 104, or tape device; a computer system memory or random access memory such as DRAM, DDR RAM, SRAM, EDO RAM, Rambus RAM, etc.; a non-volatile memory such as a Flash, magnetic media, e.g., a hard drive, or optical storage; registers, or other similar types of memory elements, etc. The memory medium may comprise other types of memory as well-or combinations thereof. In addition, the memory medium may be located in a first computer in which the programs are executed, or may be located in a second different computer which connects to the first computer over a network, such as the Internet. In the latter instance, the second computer may provide program instructions to the first computer for execution. The term "memory medium" may include two or more memory mediums which may reside in different locations, e.g., in different computers that are connected over a network.

**Software Program -** the term "software program" is intended to have the full breadth of its ordinary meaning, and includes any type of program instructions, code, script and/or data, or combinations thereof, that may be stored in a memory medium and executed by a processor. Exemplary software programs include programs written in text-based programming languages, such as C, C++, PASCAL, FORTRAN, COBOL, JAVA, assembly language, etc.; graphical programs (programs written in graphical programming languages); assembly language programs; programs that have been compiled to machine language; scripts; and other types of executable software. A software program may comprise two or more software programs that interoperate in some manner. Note that various embodiments described herein may be implemented by a computer or software program. A software program may be stored as program instructions on a memory medium.

**Program -** the term "program" is intended to have the full breadth of its ordinary meaning. The term "program" includes 1) a software program which may be stored in a memory and is executable by a processor or 2) a hardware configuration program useable for configuring a programmable hardware element.

**Computer System -** any of various types of computing or processing systems, including a personal computer system (PC), mainframe computer system, workstation, network appliance, Internet appliance, personal digital assistant (PDA), television system, grid computing system, or other device or combinations of devices. In general, the term "computer system" can be broadly defined to encompass any device (or combination of devices) having at least one processor that executes instructions from a memory medium.

**LED -** any of various types of semiconductor light emitting diodes (LEDs) and organic light emitting diodes (OLEDs). In general, semiconductor dies that produce light in response to current, light emitting polymers, electro-luminescent strips (EL), etc. Furthermore, the use of "LED" may refer to a single light-emitting device having multiple semiconductor dies that are individually controlled. It should also be understood that the use of "LED" does not restrict the package type of an LED. The use of "LED" may refer to packaged LEDs, non-packaged LEDs, surface mount LEDs, chip-on-board (COB) LEDs, and LEDs of all other configurations. The use of "LED" also includes LEDs packaged or associated with phosphor, wherein the phosphor may convert radiant energy emitted from the LED to a different wavelength of light. The use of "LED" will also include high-brightness white LEDs as well as high-brightness color LEDs in different packages. An LED array can include at least one LED or a plurality of LEDs.

**Solid State Lighting Element -** any of various types of light emitting component where photon emission occurs via electroluminescence, typically in a semiconducting material.

In the following description, numerous specific details are set forth to enable a thorough understanding of embodiments of the present invention. In some instances, well-known structures and techniques have not been shown in detail to avoid obscuring the present subject matter.

Lighting System

The following describes various embodiments of a lighting system that includes a replaceable illumination module and a base module. Embodiments of a method for use of a replaceable illumination module are also presented.

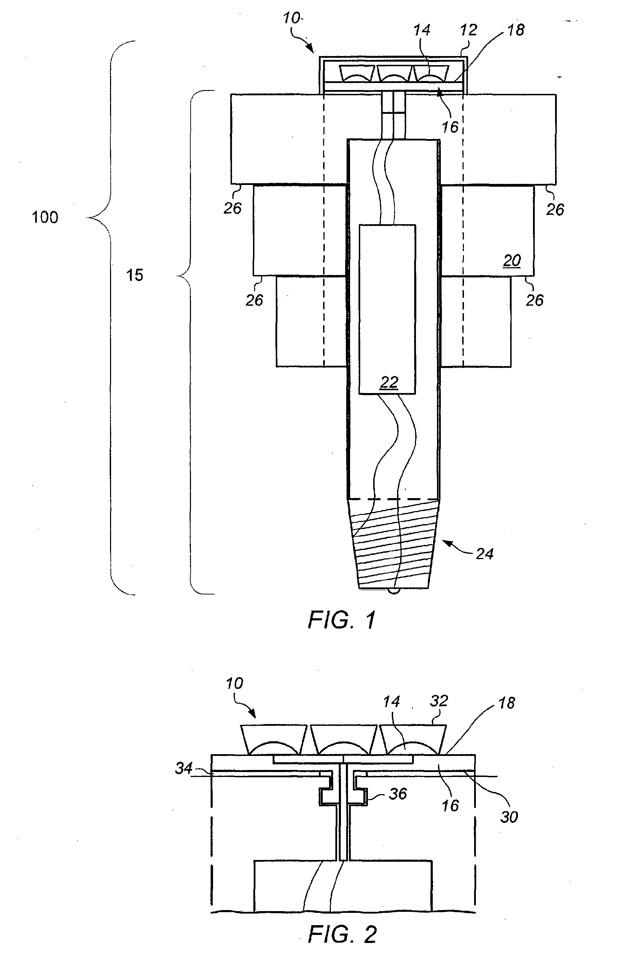

Figure 1 illustrates an exemplary embodiment of such a lighting system 100, including replaceable illumination module 10 and base module 15. As may be seen, the replaceable illumination module 10 may include one or more solid state lighting elements 14 connected to a printed circuit board 18, at least one beam conditioning element or component 12, and a thermal spreading element 16. The thermal spreading element 16 may be coupled to or included in the printed circuit board 18 and is configured for thermally coupling to the base module 15. The printed circuit board 18 may be electrically and thermally connected to the one or more solid state lighting elements and thus may conduct heat from the solid state lighting elements 14 to the thermal spreading element 16. The replaceable illumination module 10 may be removably coupled to the base module 15. The base module 15 may include a heat sink in thermal contact with the replaceable illumination module 10 via the thermal spreading element 16.

In some embodiments, the replaceable illumination module 10 may include environmental isolation functionality, and thus may provide varying levels for dry, damp, and wet location applications. For example, the replaceable illumination module 10 may be packaged in isolation to prevent moisture penetration to the solid state lighting elements 14 while allowing air flow to dissipate heat via convection.

As also shown in Figure 1, the base module 15 may include a thermal management element 20, base module circuitry 22, base connector 24, and air flow channels 26. Further details regarding embodiments of the base module 15 are provided below.

The lighting system may be upgradeable, replaceable, serviceable, and/or modular. In some embodiments, the modularity of the lighting system may enable the user to mix and match various components as required per specific applications. For example, in certain embodiments, a predetermined base component (e.g., base module or base module component) may be coupled to a predetermined adaptor component, such that the same component may be used in a different application type. The modularity of the lighting system and/or the replaceable illumination module 10 may entail substantially similar form factors of certain components, e.g., for interchangeability.

In some embodiments, the lighting system may be of the same form factor as that of prior art lighting systems, while providing luminous output equivalent to or exceeding such systems. For example, in the illustrated embodiment of Figure 1, the lighting system may be a direct "drop in" replacement for prior art lighting solutions, e.g., incandescent bulbs, compact fluorescent bulbs, etc. In some embodiments, the lighting system may have a size envelope that is compatible with applicable ANSI standards and may operate directly from 120 or 240 VAC power. In some embodiments, solid state lighting elements 14 may include a plurality of LEDs. The lighting system may be used as a direct replacement for LED light bulbs and other prior art lighting systems. For example, in the illustrated embodiment, the lighting system may not require additional ballasts or additional fixtures.

In some embodiments, the replaceable illumination module 10 may provide an optimized heat transfer interface through use of an underlying conductive structure. Figure 2 illustrates an embodiment of a replaceable illumination module 10 with an interface connection, specifically, an illumination module interface 30, which may prevent insufficient thermal connection, deleterious high LED temperature, and/or premature device failure. The illumination module interface 30 may facilitate or even optimize heat transfer. For example, in the illustrated embodiment, illumination module interface 30 may entail or apply sufficient pressure to control the gap spacing between the illumination module interface 30 and an integrated electrical and mechanical connector 36 (and/or the heat sink), which may also be referred to herein simply as "connector 36". Thus, the illumination module interface 30 may include a gap spacing that may improve (and in some embodiments may optimize) heat transfer between the illumination module interface 30 and the integrated electrical and mechanical connector 36. In some embodiments, the gap spacing may be filled with an interface thermal enhancement 34. The interface thermal enhancement 34 may include heat conductive materials such as solid pads which may be placed at the interface.

These materials may not melt or change phase at operating temperatures of the lighting system. In some embodiments, the gap spacing may be filled with materials that may be constructed of metal or ceramic filled silicone elastomer. Alternatively, the gap spacing may be filled with thermal grease, which may be metal or ceramic filled silicone or a synthetic based compound.

The illumination module interface 30 may maintain a compressive force through coupling with a conductive film, a potting compound, or a conductive pad which modifies or maintains effective thermal conductivity across the interface. For example, illumination module interface 30 may include a compressive force that may modify or maintain the thermal conductivity across the illumination module interface 30. In some embodiments, the illumination module interface 30 may maintain a pressure above a predetermined critical value that may increase the thermal conductivity that prevents a deleterious temperature rise at the solid state lighting elements 14.

In one embodiment, sufficient compressive force at the illumination module interface 30 may be achieved via spring loading via a predetermined and preset spring force. In various embodiments, the illumination module interface 30 may include standard screw fasteners or assembly method controls to set a predetermined compressive force. Alternatively, or additionally, the illumination module interface 30 may include Bayonet type connectors to engage a fastener until a stop point is reached to attain a predetermined force.

In some embodiments, the integrated electrical and mechanical connector 36 may provide maximum contact area with the illumination module interface 30 via interface thermal enhancement 34 to maintain heat conduction. Moreover, in one embodiment, the connector 36 may prevent power provision to replaceable illumination module 10 unless sufficient interfacial contact with the illumination module interface 30 is made to ensure heat removal. In other words, connector 36 may allow solid state lighting elements 14 to be powered on only when a predetermined thermal path is defined as being appropriate.

The illumination module interface 30 may include thermal conduction mechanisms that scale with contact area. For example, the illumination module interface 30 may include a high degree of planarity to insure maximum contact area with the interface thermal enhancement 34. The interface thermal enhancement 34 may include phase change materials, which may be solid pads at room temperature that melt at the operating temperature to form a substantially intimate interface between components.

In various exemplary embodiments, the interface thermal enhancement 34 (heat conductive materials) may include one or more of the following:

- a silver loaded grease that may provide superior thermal performance, e.g., high-filling silver particles, which may be micro-ionized, and/or ceramic particles, which may be thermal conductive ceramic particles, such as, for example, Arctic Silver® 5 high-density polysynthetic silver thermal compound.

- carbon based products for heat spreading and interface conduction which combine enhanced flexural properties with exceptional thermal properties of high conductivity flexible graphite, such as, for example, GrafTech International Spreadershield™ Flex formable heat spreader.
- material of low contact resistance and high thermal conductivity at low clamping loads, such as natural graphite and polymer additive, e.g., GrafTech International Hitherm™ thermal interface material.
- a thermal gap filler product that may conform to surface irregularities and replace air with a much higher thermal conductivity material, thereby increasing heat transfer, e.g., Laird Technologies® thermal gap filler pad.
- a thermal phase change material that may be a solid pad at room temperature, may melt at operating temperatures forming intimate contact on mating surfaces to produce thermal resistance, may provide superior surface wetting and minimum bond thickness, and may actively expel entrapped air, e.g., Laird Technologies® phase change material.
- compressible phase-change thermal interface materials or in-situ curing thermal interface adhesive materials that enable the filling of large gaps between heat-spreader and heat generating components that have substantial differential heights, e.g., Al Technology Inc. Cool Bond® products.
- thermal greases, which may be non-silicone based and non-migrating, may include an in-situ curing thermal interface, or may include a reworkable, silver filled, thermally conductive paste, e.g., Al Technology Inc. Cool Grease® products.

Note that in some embodiments, the illumination module interface 30 may be made substantially planar via grinding, polishing, or another finishing technique to minimize roughness of mating surfaces.

As Figure 2 also illustrates, in some embodiments the beam conditioning elements or components 12 may include one or more beam conditioning optical elements 32. The one or more beam conditioning optical elements 32 may be proximate to the one or more solid state lighting elements 14 and may be configured to modify light output from the solid state lighting elements 14 to produce a specified beam. More specifically, the beam conditioning optical elements 32 may be configured to control color temperature during operation of replaceable illumination module 10. For example, at least one of the beam conditioning optical elements 32 may be configured to spectrally transform light from the one or more solid state lighting elements 14 by absorbing photons with a first spectral distribution and emitting photons with a second spectral distribution. In some embodiments, at least one of the one or more beam conditioning optical elements 32 may include one or more of: a phosphor material or compound, a nanophotonic material, a crystalline photonic material, an optical fiber material, a photonic crystal fiber material, an engineered microstructure material, or a dielectric waveguide material.

Note that in some embodiments, the one or more solid state lighting elements 14 may include a plurality of solid state lighting elements 14, where at least two of the solid state lighting elements 14 each has a respective specified spectral output, and where at least one of the beam conditioning optical elements 32 is configured to homogenize light output from the plurality of solid state lighting elements 14, where homogenizing light output refers to light mixing or powering solid state lighting elements 14 at multiple wavelengths to achieve a desired spectrum.

The beam conditioning optical elements 32 may enhance spectral performance by improving color temperature control and may improve the color rendering index of replaceable illumination module 10. In some embodiments, spectral transformation components may be thermally decoupled from the solid state lighting elements 14, thereby enhancing efficiency and spectral performance of the replaceable illumination module 10, possibly by reducing or eliminating undesirable aspects of the spectral performance of the solid state lighting elements 14. In some embodiments where beam conditioning 12 includes modification of the spectral distribution of the output light, beam conditioning 12 may include spectral modification and color temperature alteration. For example, beam conditioning 12 may include filters for removing portions of the spectrum, or thin film reflective and/or transmissive structures for increasing or decreasing intensity of selected wavelengths.

Additionally, at least one of the beam conditioning optical elements 32 may include one or more beam forming elements that may be configured to modify a spatial intensity distribution of the photons of the second spectral distribution for control of beam concentration and beam divergence. The beam forming elements may include at least one of: one or more reflective optical elements, e.g., parabolic reflectors for light collection and directional beam output, one or more diffractive optical elements, e.g., one or more of Fresnel lenses, or one or more refractive elements, e.g., prism structures that use total internal reflectance to control and minimize beam divergence.

In some embodiments, beam conditioning element(s) or component(s) 12 may enable an intensity distribution output by the replaceable illumination module 10 to match illumination characteristics of an existing lighting fixture, e.g., uniform illumination over a predetermined distribution range. Thus, beam conditioning may include spectral distribution of the light, and may also include spatial distribution of the light, referred to as beam forming. Thus, one or more of the beam conditioning elements may be beam forming elements.

In various embodiments, the distribution range of the beam conditioning (forming) element(s) or component(s) 12 may be small, such as with a spot light, or, in the case of an Edison configuration, beam conditioning 12 may enable a large and diffuse distribution range.

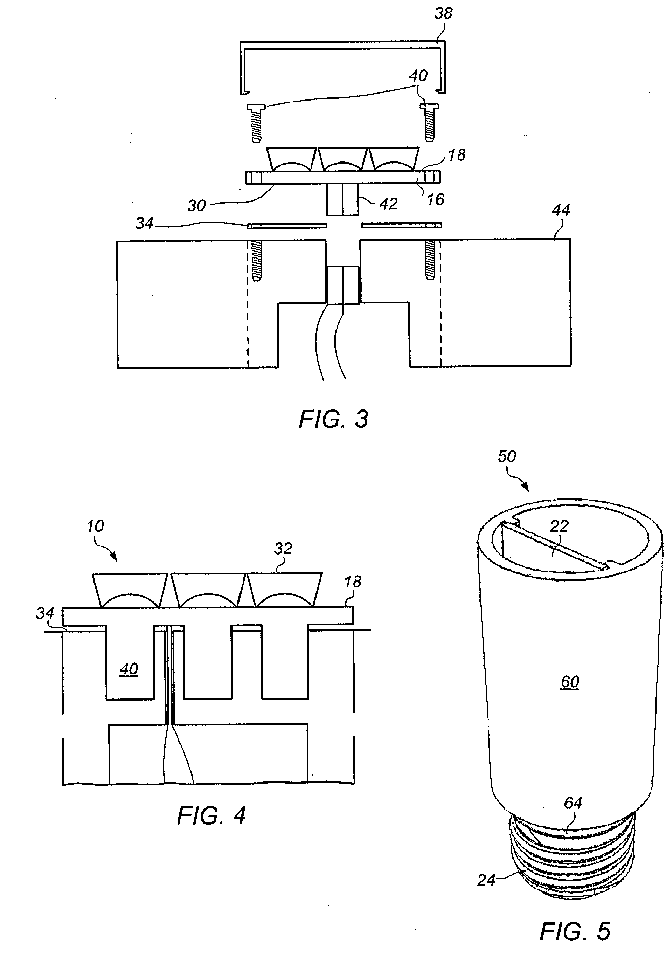

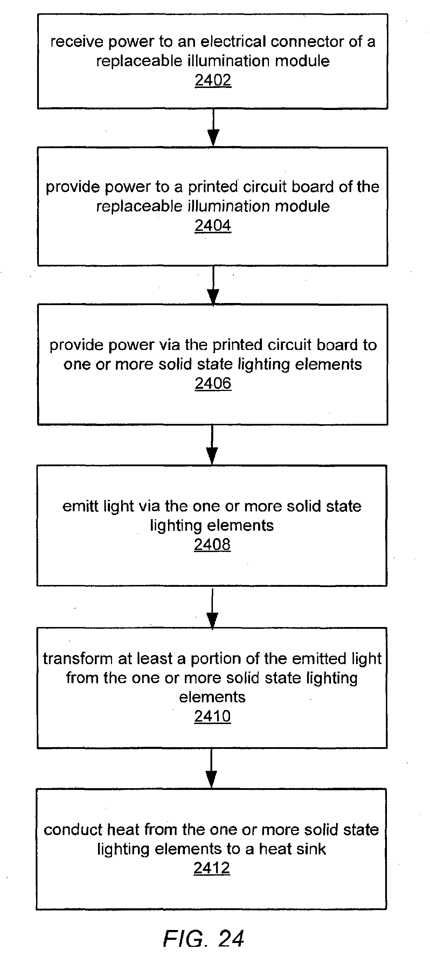

As noted above, in some embodiments the base module may include a heat sink. Figure 3 illustrates one embodiment of a functional decomposition of the replaceable illumination module's interface connection to heat sink 44. In the embodiment shown in Figure 3, the replaceable illumination module 10 includes the above-described solid state lighting elements 14, printed circuit board 18, thermal spreading element 16, illumination module interface 30, and interface thermal enhancement 34, as well as a cover cap 38, fastener 40, electrical connector 42 (described in more detail below with respect to Figure 24), and heat sink 44. In some embodiments, integrated electrical and mechanical connector 36 may include electrical connector 42.

The heat sink 44 may couple to the thermal spreading element 16 via the illumination module interface 30 and interface thermal enhancement 34, which in turn may be coupled with the solid state lighting elements 14. The replaceable illumination module 10 may thus provide a continuous thermal path from the solid state lighting elements 14 to thermal spreading element 16 through illumination module interface 30 (and interface thermal enhancement 34) to heat sink 44, thereby providing a thermal conduction path from the solid state lighting elements 14 to the surroundings, i.e., to the environment of the lighting system. Additionally, in some embodiments, printed circuit board 18 may be made of the same material as thermal spreading element 16, or may be mounted on thermal spreading element 16. In other words, thermal spreading element 16 may be part of the infrastructure of printed circuit board 18.

In some embodiments, the electrical connector 42 of Figure 3 may couple the solid state lighting elements 14 to the base module circuitry 22 (via the printed circuit board 18), thereby providing an electrical conduction path. For example, the electrical connector 42 may include at least one electrical lead that may be couple to the base module circuitry 22. As described in more detail below, in various embodiments, the base module circuitry 22 may implement any of various functionalities, including for example, power conditioning circuitry, control circuitry, or a driver circuit, among others. Thus, in embodiments where the base module circuitry 22 includes a driver circuit, the at least one electrical lead may electrically couple the solid state lighting elements 14 to the driver circuit (again, via the printed circuit board 18). Note that the base module circuitry 22 may include one or more base module printed circuit boards.

In some embodiments, the replaceable illumination module 10 may include a cover cap 38, which may provide one or more functions for the lighting system. For example, in one embodiment, the cover cap 38 may operate as a beam conditioning element 12 (see Figure 1), facilitating transmission, e.g., dispersion, of light output from the solid state lighting elements 14, and/or may isolate the solid state lighting elements 14, printed circuit board 18, and/or other components of the replaceable illumination module 10 from environmental intrusions, as noted above.

Said another way, cover cap 38 may be affixed to printed circuit board 18, and may protect the one or more solid state lighting elements 14 and printed circuit board 18 from environmental intrusions and may also diffuse light from the one or more solid state lighting elements 14. In some embodiments, at least a portion of cover cap 38 may be made of a smart material to block moisture while supporting convective heat transfer. For example, the smart material may include one or more of: a thermally conductive material with thermal conductivity of at least approximately 0.9 W/m-K or a porous material with a pore density of at least approximately $10^7$ pores/cm$^2$. More generally, replaceable illumination module 10 may include smart materials that allow for airflow while preventing moisture penetration.

More specifically, replaceable illumination module 10 (e.g., cover cap 38) may include micro-weave materials with pore sizes large enough for air/molecular transfer but too small to convey water droplets; these materials may be woven polymer fibers (e.g., GORE-TEX®), sintered metals or ceramics, ceramic fiber based, or other combinations with pore size in the appropriate range. In further exemplary embodiments, the smart materials may include materials such as Saint Gobain Thermocool® thermally conductive fabric (silicon based foam), porous polytetrafluoroethylene (PTFE) fabric, and/or sintered materials. In some embodiments, sintered materials may be produced from plastic, metal and ceramic fibers, spheres, and/or powders.

The cover cap 38 may be secured to replaceable illumination module 10 by use of a pressure fit with thermal spreading element 16. For example, cover cap 38 may include a retention means, such as a hook-shaped feature, so that the cover cap 38 may snap in place over the printed circuit board 18. In a further embodiment, cover cap 38 may be coupled to the printed circuit board 18 via a tension fit, which may occur via retention hooks.

Fastener(s) 40 may couple the thermal spreading element 16 to heat sink 44. In other words, the thermal spreading element 16 may be held in thermal contact with heat sink 44 via a fastening means, such as a connector, that maintains a specified interfacial force between the thermal spreading element 16 and the heat sink 44. Thus, for example, in the illustrated embodiment, a continuous thermal path may be provided from the illumination module interface 30 to thermal spreading element 16 to heat sink 44. In certain embodiments, fastener 40, when installed, may be fastened to a complementary threaded hole included in or coupled to a shaft of the base module 15, described in more detail below with reference to Figures 5 and 6. In some embodiments, fastener 40 may include a common type of screw, such as a Phillips head, flat-head, hex-head screw, that can be tightened or loosened using a common tool, such as a screw driver or an Allen wrench. Fastener 40 may be coupled with a complementary screw boss, which may not be pre-threaded. Fastener 40 may be threaded and may a self-tapping screw, a thread-forming screw, a Avdel Rivscrew, or a PEM stickscrew, among others.

In some embodiments, fastener 40 may be coupled to a complementary screw boss, which may be included in heat sink 44. Similarly, circular features included in or coupled to heat sink 44 may include a complementary screw boss that couples with fastener 40.

Figure 4 illustrates an embodiment in which the illumination module interface 30 includes at least one thermally conductive pier 40. The pier 40 may be a substantially columnar structure that may increase contact area between the illumination module interface 30 and interface thermal enhancement 34. The pier 40 may conduct heat from the replaceable illumination module to heat sink 44 (described in further detail below with reference to Figures 7 and 8). The thermally conductive pier 40 may be constructed of high thermal conductivity metal, such as aluminum or copper, and may be held in thermal contact with the replaceable illumination module 10 to transfer heat produced by the solid state lighting elements 14. In one embodiment, the at least one thermally conductive pier 40 may be inserted into mating features on heat sink 44. Moreover, contact between the at least one thermally conductive pier 40 and the heat sink 44 may be augmented via a substantially close fit, spring, or other compressive force, thermal greases, or other means. Heat conduction from the replaceable illumination module 10 to the at least one thermally conductive pier 40 may also be enhanced through the use of thermoelectric cooler devices, described below.

Figures 5 and 6 illustrate exemplary embodiments of a shaft and base connector assembly 50 for coupling to a replaceable illumination module. As shown in Figure 5, shaft and base connector assembly 50 may include base connector 24, shaft 60, base adaptor 64, and base module circuitry 22, where the base adaptor 64 may couple base connector 24 with shaft 60.

In some embodiments, base connector 24 may included a threaded fastening means that may be coupled to a complementary aspect linked with a lighting fixture. For example, in the illustrated embodiment, base connector 24 may be screwed into a complementary threaded socket of a lighting fixture. In other embodiments, base connector 24 may include a bi-pin base or a twist-lock means. In some embodiments, base connector 24 may be or include a fitting, wireway, or strain relief bushing.

In some embodiments, base connector 24 may be in accordance with an American National Standard and/or an IEC lamp base standard. For example, the base connector 24 may be configured to fit the American National Standard ANSI_ANSLG C81.67-2007 standard. In various exemplary embodiments, base connector 24 may be associated with a BA15 Candelabra single-contact or double-contact bayonet base, a BAY15s or BAY15d base, a BAZ15d base, a E26 medium screw thread, a E39 mogul screw thread, a EP39 position-oriented mogul screw base, a EX39 exclusionary mogul screw base, a G13 medium Bipin base, a P8.25d base, a P12.4d base, a R17d recessed double-contact base, an E29/28 single contact Admedium screw base, or a E29/53x39 skirted Admedium screw base, among others.

In one embodiment, base connector 24 may be inserted into a complementary recess of an existing lighting fixture. For example, base connector 24 may be installed, fastened, or removed via a screw motion into a complementary recess of an existing lighting fixture. Thus, for example, base connector 24 may be electrically coupled to a complementary recess of an existing lighting fixture upon substantial insertion into an existing lighting fixture. Thus, in certain embodiments, a user may install or uninstall replaceable illumination module 10 into and out of an existing lighting fixture. In certain embodiments, replaceable illumination module 10 may be a modular system that may be configured to create various types and purposes of lighting fixtures, including for track lighting replacements, sconces, exterior lighting fixtures, emergency lighting, work lighting, film and video lighting, accent lighting fixtures, moving fixtures, and articulated mountings for various purposes.

As discussed above, base module circuitry 22 may include a driver circuit. Situating the base module circuitry, and thus the driver circuit, in the base module rather than the replaceable illumination module may provide for field replacement of LEDs (e.g., via replacement of the replaceable illumination module 10). Similarly, the driver circuit may be replaced independently of the illumination module (also referred to as a light engine). Thus, by replacing base module circuitry 22, including the driver circuit, the driver circuit may be upgraded to support additional or improved lighting features and functions, i.e., base module circuitry 22 may enable ease of feature change via a replacement that supports additional capabilities. For example, the driver circuit may be replaced with an improved efficiency driver circuit that may make replaceable illumination module 10 to be more efficient. In various other exemplary embodiments, the base module circuitry 22 may include upgradeable capabilities which may enable base module circuitry 22 to be upgraded to an improved energy efficient driver circuit, to be upgraded to a networked or smart device, to be upgraded to support next generation technology, or to be upgraded to integrate higher efficiency emitter technology, among others.

More generally, replacing the base module circuitry 22, which may include one or more of the driver circuit, power conditioning circuitry, or control circuitry, may facilitate easy modification or upgrades to the lighting system. For example, the base module circuitry 22 may be replaced to improve a power factor and/or reduce total harmonic distortion for the lighting system. As further examples, the base module circuitry 22 may be replaced in case of a field failure of the driver circuit, or may be serviced due to prematurely failed components and consequently replaced.

Thus, while prior solutions use non-modular drivers/power supplies and so forth, embodiments of the present invention may provide not only a replaceable illumination module 10 that may be upgradeable or replaced, but may also provide a base module circuitry 22 that, while substantially encapsulated by shaft and base connector assembly 50 of the base module, may be accessible to promote upgrades or replacements.

Figure 6 illustrates an embodiment of the shaft and base connector assembly 50 that further includes printed circuit board header 70, and a complementary connector 68, although in other embodiments either or both of these elements may be omitted or replaced with other elements.

Figure 7 illustrates an embodiment of the lighting system that includes an exemplary heat sink 44 coupled to shaft and base connector assembly 50 via shaft 60. As shown, in this exemplary embodiment, the heat sink 44 includes one or more heat fins 46. In some embodiments, the heat sink 44 may be extruded, as discussed in detail below.

The use of heat sink 44 may prevent deleterious failure modes that can occur when the operating temperature of the illumination module exceeds some nominal value. For example, the heat sink may prevent thermal degradation of the p-n junction on the (lighting) die, may prevent phosphor performance degradation and increase the life span of the replaceable illumination module 10, may prevent spectral shift in the light output from the illumination module 10, or may prevent out of specification color temperature and luminosity performance, among other benefits.

Additionally, the lighting system may include cover cap 38 and base connector 24, both described above in detail. As may be seen, the replaceable illumination module 10 may not be visible under the cover cap 38. In some embodiments, cover cap 38 may be configured to package extruded heat sink 44. For example, in the illustrated embodiment, cover cap 38 may minimize manufacturing costs by eliminating heat sink machining operations. Additionally cover cap 38 may provide integration locations and enclosures for sensors and other advanced control devices.

In some embodiments, heat sink 44 may be coupled to shaft and base connector assembly 50 with an interference or press fit. For example, heat sink 44 may be coupled to shaft 60 by a predetermined controlled pressure, e.g., by a user applying a predetermined torque with a plurality of screws. In some embodiments, heat sink 44 may be upgradeable, replaceable, serviceable, and/or modular, such that heat sink 44 may be easily substituted with a replacement heat sink, e.g., with a new or improved heat sink for improved functionality. Moreover, the heat sink 44 may be temporarily removed such that other components of the lighting system may be substituted with replacement components. As used herein, the end or portion of the heat sink nearest to the replaceable illumination module is referred to as the "proximal" end or portion, and the end of the heat sink furthest from the replaceable illumination module is referred to as the "distal" end or portion.

Figure 8 illustrates an exemplary heat sink, according to one embodiment. In some embodiments, the heat sink 44 may be made at least partially from a material with a predetermined thermal conductivity. For example, the material may have a thermal conductivity of at least approximately 180 W/m-K. In one exemplary embodiment, heat sink 44 may include or may be made of a high thermal conductivity aluminum material. Moreover, in some embodiments, the heat sink 44 may include a planar surface, e.g., for thermal contact with the thermal spreading element 18.

The heat sink 44 may include a heat sink boss 48, which may provide for alignment of heat sink relative to shaft and base connector assembly 50 (see, e.g., Figures 5 and 6). In some embodiments, the heat sink boss 48 may provide a thermal path which may facilitate the transfer of heat from the solid state lighting elements 14 to the thermal spreading element 16, through the illumination module interface 30 and interface thermal enhancement 34, to heat sink 44.

As shown in Figure 8, the heat sink 44 may include a plurality of heat fins 46, which may provide increased life span for the replaceable illumination module 10 by providing heat transfer from replaceable illumination module 10 to the surroundings. For example, in the illustrated embodiment, heat sink 44 may include a plurality of radial heat fins 46, which may enhance thermal transmission to the surroundings by conductive heat dissipation. As Figure 8 also indicates, in some embodiments, each heat fin may have a specified nonzero curvature.

In some embodiments, the heat sink 44 may be manufactured via an extrusion process, discussed in detail below. In other words, the heat sink 44 may be or include at least one extrusion. Moreover, as Figures 7 and 8 show, the at least one extrusion may include a plurality of heat fins 46, where, as indicated above, the plurality of heat fins 46 may be made of a material with a thermal conductivity of at least approximately 180 W/m-K, and where, as Figure 1 shows, the plurality of heat fins 46 may form a plurality of air flow channels 26 for convectively dissipating heat.

In some embodiments, heat sink 44 may be tapered. For example, the heat sink 44 may have a monotonically increasing or monotonically decreasing radius along the axis of the structure, where the proximal end of the heat sink has a larger diameter than the distal end. Thus, the at least one extrusion may be a tapered extrusion.

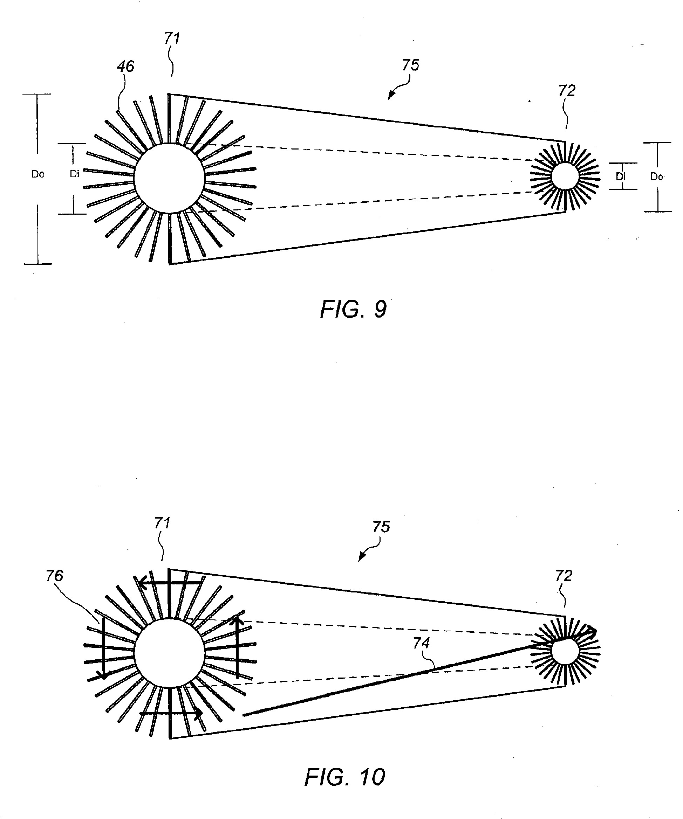

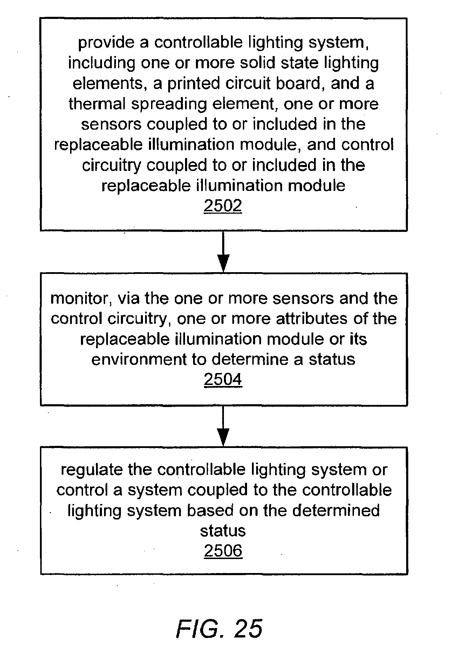

Figure 9 illustrates a tapered heat sink with heat fins 46 via exemplary proximal (left) 71 and distal (right) 72 cross-sections, according to one embodiment. As may be seen, in this illustration, the proximal cross-section 71 of the heat sink has a larger outer diameter (Do) than that of the distal cross-section 72, and so the heat sink is tapered, as indicated by 75. In this exemplary embodiment, the proximal cross-section 71 also has a larger inner diameter Di than that of the distal cross-section 72, although it should be noted that in some embodiments the inner diameters may be the same, i.e., the inner diameter of the heat sink may be constant. Note that there are a number of ways to produce such a tapered heat sink. Embodiments of a novel method of extruding such a heat sink are described below with reference to Figure 25.

Other geometries are also contemplated. For example, Figure 10 illustrates an exemplary embodiment in which the heat sink is both tapered 75 and twisted 76 to further increase heat fin 46 surface area in a given volume. The twist 76 is indicated by the four arrows arranged counterclockwise around the left cross-section. Note that such a twist imparted to the heat sink results in spiraling heat fins, as indicated by 74, which shows the resulting change in angular position of the cross-section of a given heat fin from the proximal cross-section to the distal cross-section of the heat sink. Embodiments of a novel method of extruding such a heat sink are also described below with reference to Figure 25.

In some embodiments, heat sink 44 may include a plurality of constituent heat sinks, which may be stacked. Each of the plurality of constituent heat sinks 44 may be of different outer diameters with a common center and internal diameter, and may be mounted on a common counter-shaft. In some embodiments, the plurality of constituent heat sinks 44 may be fused together. Thus, in embodiments where the heat sink is made via an extrusion process, the heat sink 44 may include a plurality of stacked extrusions, where each stacked extrusion has a respective radius. The plurality of stacked extrusions may be ordered in accordance with their respective radii to form a stepwise tapered heat sink 44. As used herein, "stepwise tapered" refers to a structure similar to a (possibly inverted) wedding cake, as shown in Figures 1, 11, 12, and 13. In some embodiments, the heat fins 46 of at least one of the plurality of stacked extrusions may not be aligned with the corresponding heat fins 46 of at least one adjacent stacked extrusion. In other words, the corresponding heat fins of adjacent extrusions may be offset or staggered with respect to one another.

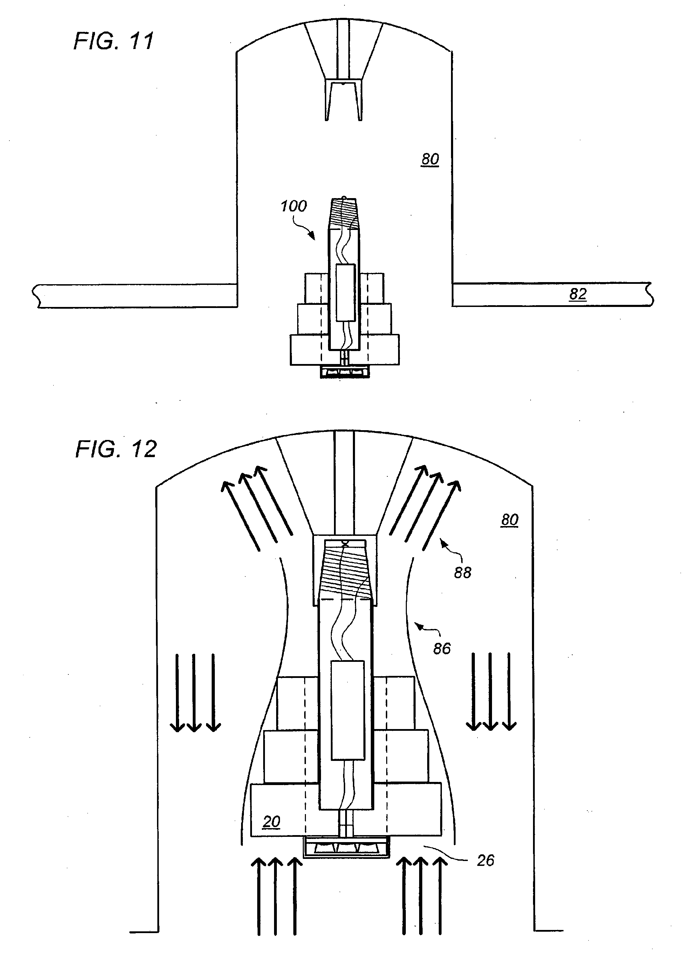

Figure 11 illustrates an exemplary lighting fixture in relation to one embodiment of the lighting system 100 disclosed herein. In some embodiments, the lighting system 100 may be coupled to lighting fixture 80, which may be part of or installed in ceiling element 82, e.g., a ceiling tile. In other embodiments, lighting fixture 80 may be fixed to or located near ceiling element 82.

In some embodiments, the lighting system may serve as a replacement for or in an existing lighting fixture. For example, the lighting system 100 may be a retrofit to an existing lighting fixture and thus may enable replacement of the LED lamp by the lighting system 100. In some embodiments, replaceable illumination module 10 combined with exemplary heat sink 44 may reduce the cost of ownership over that of competing technologies and substantially mitigate the environmental impact of failed units through its reuse. Moreover, in some embodiments, the replaceable illumination module 10 may itself be a replacement for an older or less functional illumination module in a lighting system as disclosed herein, while retaining use of the (original) heat sink 44.

In some embodiments replaceable illumination module 10 may include a base configuration that may conform to an existing commercially available lighting unit. For example, replaceable illumination module 10 may include screw threads, which may be of an Edison configuration, pin bases, and bayonet mounts, or may mimic the function of existing spot, flood, and Edison (standard light bulb or capsule) lights. In some embodiments, replaceable illumination module 10 may conform to specific light wavelength requirements of an existing lighting fixture. For example, in various embodiments, the replaceable illumination module 10 may specifically support plant growth cycles in agricultural applications or may support certain spectral modes, such as short wavelength for enhancing image resolution, in imaging applications, among others. In other words, various models of the replaceable illumination module 10 may be provided that may be particularly suitable for specific applications.

Thus, with specific reference to Figure 11, in some embodiments, the lighting system 100 may function as a retrofit LED lamp, which may be coupled to lighting fixture 80, where lighting fixture 80 may be an existing lighting system, such as a R/PAR 38, R/PAR 30, R20, MR16, A19, T8, or PLD CFL stick, among others. Moreover, in various embodiments, lighting fixture 80 may be a cobra head street light, security street light, parking lot light, parking garage light, high bay light, low bay light, stairway light, low profile light, or runway light, among others.

The lighting system 100 may be configured to promote convective heat transfer from replaceable illumination module 10 to the surroundings. For example, in the illustrated embodiment, the lighting system 100 may be aligned to promote density driven air flow through the plurality of air flow channels of heat sink 44.

In some embodiments, effective or improved heat extraction from illumination module 10 may be achieved by heat sink 44 by use of multi-fin and/or bifurcated designs. The heat sink 44 may promote heat transfer from replaceable illumination module 10 to the surroundings by use of the thermal material of heat sink 44, e.g., via conduction and/or radiation, and in some embodiments may also promote heat transfer by convective means.

Referring again to Figure 8, heat sink 44 may include a plurality of heat fins 46 such that spacing between a pair of heat fins 46 may provide for air flow channels 26. For example, in the illustrated embodiment, heat sink 44 may include air flow channels 26 to promote maximal heat extraction by convection. In other words, in some embodiments, a plurality of air flow channels 26, which may be air flow channels, may convectively transfer heat from replaceable illumination module 10 to the surroundings. For example, the air flow channels 26 may utilize thermal/density driven air flow to promote convective heat loss to the surroundings, e.g., may promote passive cooling to induce heat transfer from heat sink 44.

Moreover, in further embodiments, the air flow channels 26 may be used in conjunction with at least one active cooling apparatus to induce heat transfer from replaceable illumination module 10. For example, thermal management element 20 (shown in Figure 1, and which includes heat sink 44) may include any of various forced convective means to further enhance heat extraction from replaceable illumination module 10, which may drive additional temperature isolation of replaceable illumination module 10 from ambient conditions, and may also help meet applicable environmental requirements. In some embodiments, a recessed can, such as shown in Figures 11 and 12, which accommodate shaft and base connector assembly 50 (see, e.g., Figures 5 and 6), may also contribute to enhanced heat removal from replaceable illumination module 10.

In certain embodiments, convective enhancements of replaceable illumination module 10 may be theoretically modeled and analytically estimated as flow over a constant-temperature body of arbitrary shape. For example, the convective enhancements may be estimated through a calculation of heat transfer through a laminar boundary layer on a body of arbitrary shape, which may involve solving a momentum equation to establish the velocity field and then solving an energy equation. This theoretical process may be performed with any desired degree of precision by use of a finite difference procedure or an approximate solution from momentum and energy integral equations.

In other embodiments, the analytical estimation of convection heat transfer may involve solving either the momentum or energy integral equation for a constant surface temperature with an arbitrary free-stream velocity variable based on the energy integral equation, in which case, the rate of growth of the thermal boundary-layer thickness may be a function of local parameters:

$$\frac{d\Delta}{dx} = f\left(\Delta, u_{\infty}, \frac{du_{\infty}}{dx}, v, \text{Pr}\right),$$

where

$\Delta$ is the thermal boundary-layer thickness,
$u_{\infty}$ is velocity in the free stream at the outer edge of the boundary layer,

$\dfrac{du_{\infty}}{dx}$ is the rate of change of the free stream velocity,

$v$ is the kinematic viscosity, and
Pr is the Prandtl Number.

In further embodiments, the convective enhancements in replaceable illumination module 10 may be theoretically modeled and analytically estimated as flow of a body of arbitrary shape and an arbitrarily specified surface temperature. Convective flow over replaceable illumination module 10 may thus include solving first the momentum equation for a predetermined free-stream velocity, and then the energy equation for a varying surface temperature. Direct numerical solutions of differential equations of the boundary layer may provide a temperature estimation of the variable-surface-temperature for flow for a body over which the free-stream velocity varies.

Figure 12 illustrates an exemplary embodiment of various convective enhancements to the lighting system 100. As discussed above, in some embodiments, the lighting system 100, which may be or operate as a retrofit LED lamp, may be coupled to lighting fixture 80, e.g., to provide induced natural convection 88, as Figure 12 indicates graphically. Additionally, as Figure 12 also shows, in some embodiments, the lighting system may include an air flow baffle 86 to further increase convection. For example, the heat sink may be encircled by the air flow baffle 86, which may increase the convective heat transfer coefficient with induced natural convection 88. The air flow baffle 86 may interrupt the hydrodynamic and thermal boundary layers and form a recirculation zone between the surface of the lighting system 100 and the lighting fixture 80. This recirculation zone has the effect of moving cooler ambient air into contact with heat sink 44. In other words, the flow baffle 86 may encircle heat sink 44 and may utilize a temperature differential to promote convective heat transfer away from heat sink 44.

Thus, in some embodiments, induced natural convection 88 may be implemented or facilitated by thermal management element 20 in combination with replaceable illumination module 10, air flow baffle 86, and/or a temperature differential between the lighting system 100 and the surroundings. Additionally, in some embodiments, induced natural convection 88 may be promoted by the use of smart materials (e.g., in the cover cap) to block moisture while supporting convective heat transfer enhancements of the replaceable illumination module 10.

In some embodiments, thermal management element 20 may include a standard rigid package or a flexible/conformable substrate, and may include high thermal conductivity metals that may be configured as a surface flash treatment or in bulk to convey heat.

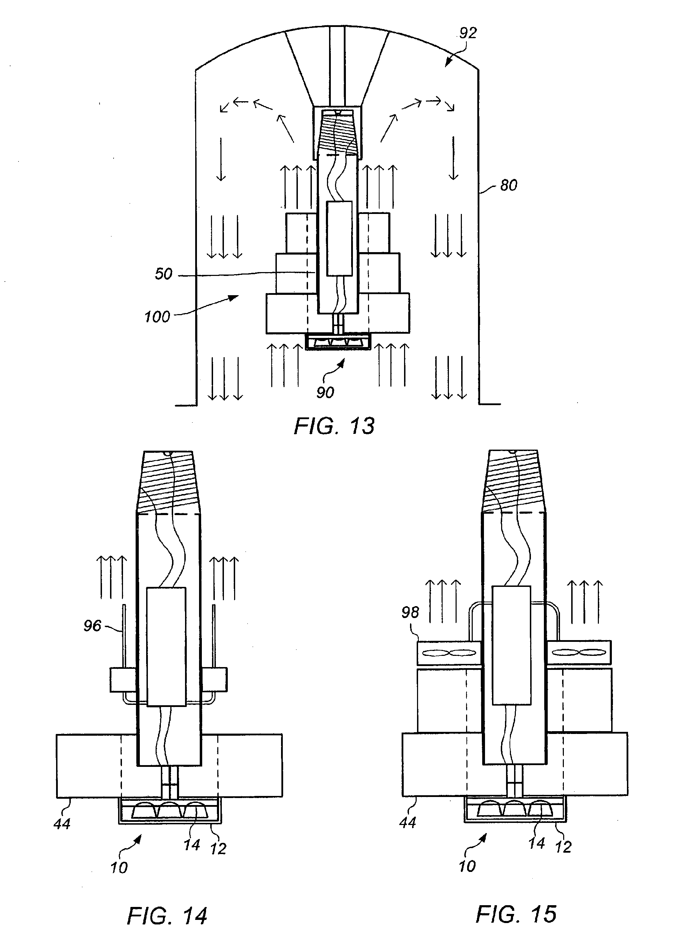

Figure 13 illustrates further details regarding convective enhancements to an embodiment of the lighting system 100 in relation to the exemplary lighting fixture 80, where, for example, the lighting system 100 may serve as a retrofit LED lamp. To provide transfer of heat from a higher temperature surface to a lower temperature surface, the surface of the solid state lighting elements 14 may be below the shaft and base connector assembly 50, and thus, the air surrounding solid state lighting elements 14 may be at higher air temperature 90 than the air surrounding shaft and base connector assembly 50, which may be at lower air temperature 92, and so will rise to the top of the fixture cavity, e.g., the fixture "can". As also shown in Figure 13, once the air reaches the top of the cavity and has cooled, it will flow downward and either exit the fixture, or reheat and re-circulate.

Other passive cooling techniques or devices may be used as desired. In some embodiments, the thermal management lighting system may include a passive cooling element coupled to or included in replaceable illumination module 10, where the passive cooling element includes one or more of: a heat pipe, a Venturi effect device, or a convective flow device, among others.

In some embodiments, the lighting system 100 may include active cooling means in addition to such passive convective cooling means. Figure 14 illustrates use of an exemplary piezoelectric device 96 in the lighting system 100, according to one embodiment. Actually, the illustrated embodiment includes two such devices, one on either side of the shaft and base connector assembly 50, although it should be noted that any number of such devices may be used as desired. The piezoelectric device 96 may include a biomorph piezoelectric structure that includes two plates or layers with piezoelectric layers having opposite polarities, here seen edge on. The two plates may be referred to as a dual plate. A voltage may be applied to the piezoelectric device 96, thereby causing the two plates of the biomorph piezoelectric structure to respectively expand and contract at the same time. The resulting size differential causes the dual plate to deflect to one side Supplying this exemplary piezoelectric device 96 with an alternating current may thus cause successive deflections from side to side, thereby fanning or waving the air, pulling air away from the solid state lighting elements 14, and increasing air flow through the heat sink 44.

In another embodiment, one or more piezoelectric bellows may be utilized, where a chamber with one or more piezoelectric walls is periodically pulsed to "puff" air in a specified direction, e.g., by repeatedly expanding or contracting the volume of the chamber, causing air to be successively taken in and expelled. In other embodiments, any types of piezoelectric devices or techniques may be used as desired, e.g., ionization based "fans" with no moving parts, etc. Thus, one or more piezoelectric devices 96 may promote air flow around solid state lighting elements 14 and/or force convective heat transfer through and/or over heat sink 44, thereby dissipating more heat than passive convection alone.

Other active cooling means are also contemplated. Figure 15 illustrates an embodiment in which the light system 100 includes at least one tube axial fan 98 (in this particular case, two such fans). The tube axial fan 98 may include a propeller (or, alternatively, a disk-type wheel) within a cylinder (the tube). In certain embodiments, tube axial fan 98 may be either belt-driven or may be connected directly to a motor. The tube axial fan may force convective heat transfer or may induce airflow over heat sink 44 to enhance overall convective heat transfer.

In various other embodiments, the lighting system 100 may include one or more of: a thermoelectric cooler, a phase-change device, a voice coil based flipper fan, a synthetic jet cooler, or an acoustically-driven cooler, among others. For example, in an embodiment that uses a thermoelectric cooler, the thermoelectric cooler may be integrated with the heat sink to increase heat fin temperature differential, thereby boosting convective heat transfer. Similarly, the thermal management element 20 may include heat pipes or other phase change devices that may augment heat flow away from the solid state lighting elements 14.

The use of solid state lighting elements 14 provides numerous benefits over incandescent lighting devices. Note, for example, that solid state lighting elements 14 may enable a lumens per watt output of the replaceable illumination module 10 to be substantially higher than that of an incandescent illumination source. Moreover, in some embodiments, solid state lighting elements 14 may enable energy efficiency and thermal efficiency to be substantially higher than that of incandescent illumination source. Moreover, the size and form factor of solid state lighting elements 14 may be packaged for compatibility with ANSI standards. In some embodiments, the life expectancy of replaceable illumination module 10 may greatly exceed the life expectancy of incandescent lamps. For example, the life expectancy of replaceable illumination module 10 may be extended through power conditioning and power delivery methods (described in detail herein) that may extend life by minimizing LED "on time" while still supplying sufficient illumination. In certain embodiments, redundant LED elements in replaceable illumination module 10 may extend the life expectancy through de-energizing failed LED elements and powering alternate LED units powered as replacements.

Moreover, the lighting system 100 may prevent premature failure of various components. For example, the life expectancy of the illumination module to be at least 30k hours. Moreover, due to the enhanced heat conduction and convection mechanisms disclosed herein, the lighting system may compactly and intensely distribute light from a plurality of encapsulated light emitting diodes with minimal thermal impact and with selective divergence output, such that entendue loss is minimized.

The solid state lighting elements 14 may be coupled to base module circuitry 22, which as noted above may include power conditioning circuitry, control circuitry, and/or a driver circuit to enable feasible AC line voltage operation while satisfying cost and packaging constraints. For example, the solid state lighting elements 14 may be optimized for AC line voltage operation and may require minimal power conditioning.

In some embodiments, the solid state lighting elements 14 may include DC LED single junctions and arrays, which may increase lumen/watt output and/or improve beam profile characteristics. Light efficiency from solid state lighting elements 14 may be enhanced while simultaneously easing beam conditioning requirements. For example, in some embodiments, solid state lighting elements 14 may include compact LED components with a substantially reduced package size while maintaining an increased lm/watt output. For example, in one exemplary embodiment, the target package size of the solid state lighting elements 14 may be on the order of 1 mm$^2$ while maintaining light output of greater than 100 lm/watt, although these specific values are meant to be exemplary only, and are not intended to limit the size or output of the solid state lighting elements to any particular value.

In various embodiments, different types of LEDs may be utilized. For example, the solid state lighting elements 14 may include multicolor LEDs and/or LED arrays, use of which may simplify color temperature and intensity control. Alternatively or additionally, the solid state lighting elements 14 may include organic LED (OLED) modules, which may include flexible substrates that allow integration into heat sink and/or optic structures. For example, the solid state lighting elements 14 may include OLED modules with multicolor pixels that may allow color temperature selection. More generally, the one or more solid state lighting elements 14 may include one or more of: a direct current light emitting diode, an alternating current light emitting diode, a multicolor light emitting diode, a solid state light source, an organic light emitting diode, or a flexible-circuit light emitting diode, among others.

In one embodiment, the solid state lighting elements 14 may include flexible circuits, such as a petal shaped flex circuit with attached LED units. In one such embodiment, an electrical connection may contain a flexible membrane and LED mounting using industry standard electronic assembly techniques. The resultant circuit shape may allow for conformal mounting to a surface that may facilitate heat removal.

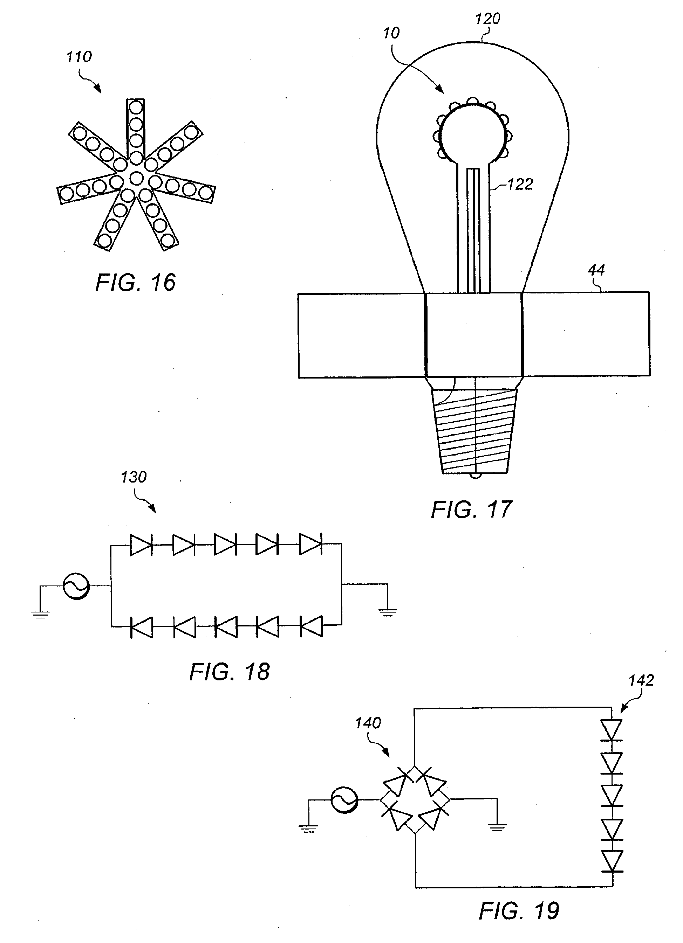

Figure 16 depicts an exemplary flexible LED module or circuit 110 that may be used in some embodiments of the replaceable illumination module 10, where, for example, the flexible LED module 110 may be conformed to a central heat removal device for thermal management element 20. Heat may be conducted from the flexible LED module 10 via a conductor to heat sink 44. In some embodiments, flexible LED module 110 may permit light output from replaceable illumination module 10 to be highly diffuse and multi-directional.

Figure 17 illustrates an embodiment of the lighting system 100 in an Edison configuration, i.e., where the lighting system has a form factor similar to a standard or typical incandescent bulb, and includes a threaded (screw) base. More specifically, the lighting system with an Edison configuration may be used in place of an Edison-style light bulb. As may be seen, this embodiment includes replaceable illumination module 10 (with flexible circuit, per Figure 16), as well as heat sink 44, beam conditioning element 120, e.g., a diffuser structure or element, and integrated thermal-electrical connector 122, which electrically and thermally couples the solid state lighting elements 14 to the heat sink 44 and power socket, respectively. Note that in this particular configuration, the replaceable illumination module 10 is isolated in the central area of the diffuser structure or element 120. In one embodiment, the thermal management element 20 configured in an Edison configuration may include copper and copper alloys and gold flash materials.

Thus, in some embodiments, thermal management element 20 may promote thermal conductivity while integrating with a predetermined form factor industry standard and/or maintaining thermal diffusion through multi-directional light output.

The solid state lighting elements 14 may be electrically connected in any of various configurations. For example, Figure 18 illustrates an embodiment of a series and parallel combination solid state lighting elements chain 130. Note that a series solid state lighting elements chain may provide for electrical series connection of solid state lighting elements 14 and may provide for voltage drop required to operate from AC line voltage. In some embodiments, the connected solid state lighting elements 14 may be applicable to DC circuits, in which the series chain may provide a drop of a supplied higher DC voltage. Thus, in some embodiments, replaceable illumination module 10 may include a series solid state lighting elements chain 130 that may operate at a higher voltage but at a lower total current.

In some embodiments, solid state lighting elements chain 130 may be configured in an anti-parallel combination that may provide luminous output over the complete AC cycle, as per Figure 18. In other words, series solid state lighting elements chain 130 may include one electrical series of a solid state lighting elements chain that may conduct during the positive portion of the AC cycle and another electrical series of the solid state lighting elements chain that may conduct during the negative portion of the AC cycle. Additional electronic elements may be added to the chain 130 to further modify voltage or current parameters during the AC cycle.

Figure 19 illustrates an embodiment of bridge rectification that may be used in some embodiments. Bridge rectification may be represented in an electrical circuit as a plurality of electrical circuit equivalent diodes 140 and/or a plurality of electrical circuit equivalent solid state lighting elements 142. A plurality of diodes may be used in conjunction with series solid state lighting elements chain 130 to achieve a predetermined voltage drop across the circuit. In some embodiments, exemplary bridge rectification may include full wave rectification that may provide 120 Hz light output.

As noted above, in some embodiments the base module circuitry 22 may include power conditioning circuitry which may deliver a specified voltage and waveform without adding undue thermal burden on the system. The power conditioning circuitry may be compact to facilitate packaging requirements while providing required lifecycle performance at minimal cost. In some embodiments, voltage and waveform attributes provided by the power conditioning circuitry may depend on the specific solid state lighting elements 14 used in the replaceable illumination module 10. For example, solid state lighting elements 14 may include a plurality of LED devices that may be operated from a DC supply in the 2 to 5 V range.

In some embodiments, solid state lighting elements 14 may include series combinations of junctions within replaceable illumination module 10 that may provide a voltage drop sufficient to allow operation directly from 120 or 240 VAC power. The solid state lighting elements 14 may operate at low voltage DC signals that may be connected by external circuitry to allow operation at AC line voltage.

In some embodiments, the power conditioning circuitry may include a current limiting resistor that may limit the total power dissipation of solid state lighting elements 14. Color temperature output of the replaceable illumination module 10 may be in part set by power dissipation of the device. Thus, in some embodiments, a fixed resistor may provide the required current limit and fix the color temperature output of solid state lighting elements 14. In other embodiments, the power conditioning circuitry may incorporate a variable resistor, solid state current source, or other controllable current output device to provide a means of adjusting the color temperature and intensity output of solid state lighting elements 14 and ultimately replaceable illumination module 10.

As noted above, solid state lighting elements 14 may be a plurality of LEDs which may require AC to DC conversion as part of power conditioning circuitry 22. The power conditioning circuitry may be or include a simple transformer, rectifier, and capacitor to provide a reasonably low ripple DC output. In other embodiments, the power conditioning circuitry may include complex conversion circuits that may be devised or purchased, and may include digital control and/or other enhanced features.

For example, the power conditioning circuitry may include pulse width and height modulation circuits. In further embodiments, the power conditioning circuitry may operate to decrease or minimize thermal output by cycling power of a DC LED periodically at a sufficient frequency to achieve desired light output, color temperature, and flicker free operation. This process of modulation may provide a dimmer function for DC LED units.

In some embodiments, electrical characteristics of driven components in the lighting system may be used as part of the power conditioning circuitry. For example, diode behavior of the solid state lighting elements 14 junction may implement a rectifier circuit. As discussed above, the plurality of solid state lighting elements 14, which may be LEDs, may be connected in series in replaceable illumination module 10, thereby providing a voltage drop to allow direct operation from an AC source; alternatively, or additionally, anti-parallel connection of two or more series chains may effectively self rectify and directly operate from an AC source, where each series chain may output light over half of the AC cycle.

In some embodiments, the power conditioning circuitry may include diodes in a bridge configuration to power a series chain of LED units. The total voltage drop may be realized by the drop across exemplary rectifier diodes and the LEDs. Thus, in certain embodiments, the resultant 120 Hz light output may be sufficiently flicker free.

Diode characteristics of other circuit components such as thermoelectric coolers may be used as well. For example, thermoelectric coolers may use a p-n junction as part of the heat pump effect and exhibit diode type behavior. In some embodiments, a thermoelectric cooler component may be included as part of a circuit such that the thermoelectric cooler may be energized along with the corresponding series solid state lighting elements chain. Note, however, that other thermal cooling means are also contemplated, as described in detail above.

Intelligent Control

In some embodiments, the lighting system 100 may include or be included in a controllable lighting system, and may include one or more sensors (e.g., a light sensor) and circuitry for determining status or attributes of the lighting system 100 or its environment, which may then be used to control the system (and/or another system).

Thus, for example, the lighting system 100 may include a wavelength (e.g., color) sensor component for modulating color temperature output from replaceable illumination module 10, where the wavelength sensor component may be included in or electrically coupled to replaceable illumination module 10. Similarly, the lighting system 100 may include an intensity sensor component for modulating light intensity output from replaceable illumination module 10, where the intensity sensor component may be included in or electrically coupled to replaceable illumination module 10.

In some embodiments, the lighting system 100 may include at least one temperature sensor included in or coupled to replaceable illumination module 10 or heat sink 44. The temperature sensor may be configured for use in sensing, feedback, and control of temperature in replaceable illumination module 10. For example, the temperature sensor may measure temperature of the replaceable illumination module 10 or thermal spreading element 16, for use in regulating operation of the lighting system. The temperature sensor may be a thermocouple, in which the junction may be in thermal contact with thermal spreading element 16.

The control circuitry may be configured to monitor the temperature via the temperature sensor and control the lighting system to regulate the temperature. For example, to control the lighting system to regulate the temperature, the control circuitry may be configured to deactivate or activate at least one of the solid state lighting elements 14, or modify power provided to the printed circuit board 66.

As noted above, the lighting system may include at least one active cooling element (e.g., a thermoelectric cooler, a phase-change device, a fan, a piezoelectric fan, a voice coil based flipper fan, a synthetic jet cooler, or an acoustically-driven cooler, among others) coupled to or included in replaceable illumination module 10. Thus, in some embodiments, to control the controllable lighting system to regulate the temperature, the control circuitry may be configured to deactivate or activate the at least one active cooling element.

In some embodiments, the at least one sensor may be configured to couple to an automated control network for regulation of color output, light-intensity output, or temperature in the replaceable illumination module by the automated control network. Moreover, the at least one sensor may be configured to couple to the automated control network wirelessly.

More generally, in various embodiments, the lighting system 100, and possibly the replaceable illumination module 10, may include one or more sensors, including one or more of: a photosensor, a color sensor, a light-intensity sensor, or a temperature sensor, which in some embodiments, may be coupled to the automated control network (possibly wirelessly) for regulation of color output or light-intensity output in replaceable illumination module 10 by the automated control network.

The one or more sensors may be proximate to one or more beam conditioning optical elements 32, and control circuitry may be coupled to the one or more sensors. The control circuitry may be configured to monitor spectral distribution or intensity distribution of spectrally transformed light from the one or more solid state lighting elements 14 via the one or more sensors and modify at least one or more of the beam conditioning optical elements 32 to control color temperature or intensity distribution of the beam. Thus, the one or more sensors may be configured to measure one or more attributes of replaceable illumination module 10 or its environment, and the control circuitry may be configured to couple (possibly wirelessly) to the automated control network for regulation of color output or light-intensity output of the lighting system by the automated control network, based on the measured attributes. Note that "environment" may refer to the immediate surroundings of the replaceable illumination module 10, or those external to the lighting system 100.

Said another way, the control circuitry may be configured to monitor the one or more attributes to determine a status of the lighting system via the one or more sensors, and the status may be used to regulate the lighting system or control a system coupled to the lighting system. For example, as described above, in some embodiments, the lighting system 100 includes at least one beam conditioning element or component 12, and so to control the controllable lighting system, the control circuitry may be configured to monitor light emitted from the one or more solid state lighting elements 14 or ambient light via the light sensor, and control the one or more beam conditioning optical elements 32 to generate a specified beam. Thus, by using various sensors and control circuitry (and possibly the automated control network), any of the various aspects of the lighting system may be monitored and controlled.

In one exemplary embodiment, the lighting system 100 may be included in a multi-zoned lighting system, where network control of the lighting system may include occupancy dependent zone control, which refers to detection of occupants in a zone followed by reporting to a network. For example, the lighting system may be included in or coupled to an alarm or notification system. In one exemplary embodiment, the one or more sensors may include one or more of: a motion detector, a smoke detector, a chemical sensor, or a carbon monoxide detector. In further embodiments, the lighting system may include or be coupled to one or more of: a video camera, a still camera, a motion detector, a chemical sensor, or a carbon monoxide detector. Note, however, that these sensors are meant to be exemplary only, and are not intended to limit the invention or its use to any particular set of sensors.

In some embodiments, multiple lighting systems 100 may be coupled together to form a lighting network. Additionally, in certain embodiments, multiple exemplary power conditioning and power driver configurations may be incorporated to power more than one replaceable illumination module 10 in a lighting network.

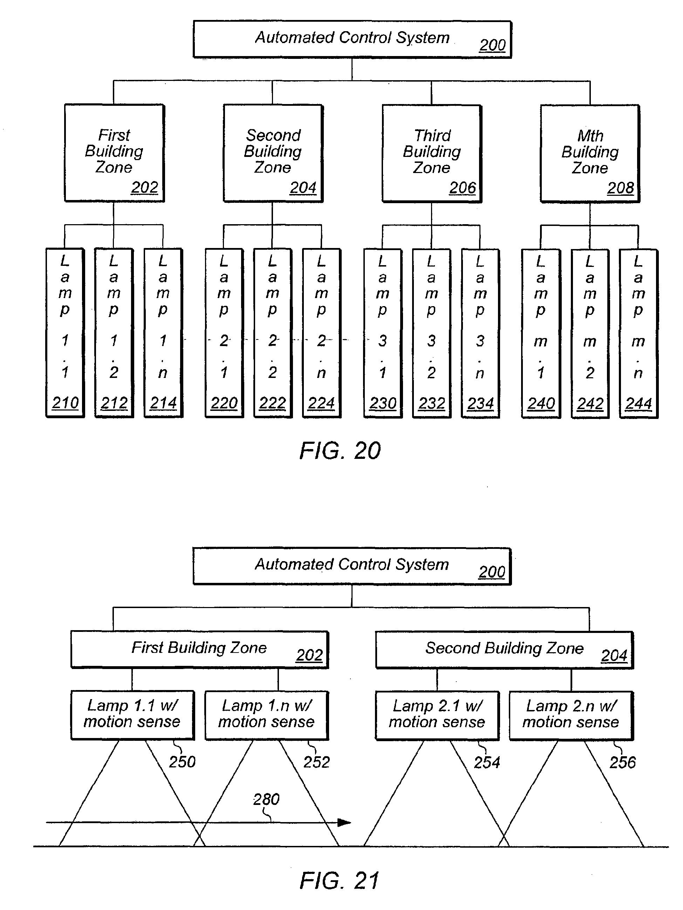

Figure 20 illustrates an embodiment of an automated control system 200 for lighting control, where the automated control system 200 controls at least one building zone, in this case, first building zone 202, second building zone 204, third building zone 206, and so on, up to some M$^{th}$ building zone 208. Each building zone may include at least one lighting system, referred to as a "lamp" in Figure 20. For example, in the illustrated embodiment, first building zone 202 includes first lamp 210, second lamp 212, and numerically up to Nth lamp 214, where each lamp is designated with its zone and lamp number, e.g., lamp 1.1, lamp 1.2, ..., 1.n, and second building zone 204 includes first lamp 220 (lamp 2.1), second lamp 222 (lamp 2.2), and so on up to Nth lamp 224 (lamp 2.n), and similarly for the other zones, up to and including the M$^{th}$ zone's lamp m.n 244. Thus, multiple building zones may each include at least one lamp, which may include at least one replaceable illumination module 10. It should be noted that while in some embodiments, each lamp or lighting system may include a heat sink 44 coupled to the replaceable illumination module, while in other embodiments, the lamp or lighting system may not include such a heat sink, although other cooling elements or techniques may be used as desired.

In some embodiments, the automated control system 200 may implement computer-based control of the solid state lighting elements 14 in a networked lighting system. For example, each lighting system coupled to the automated control system 200 may be controlled independently of one another based on data transported throughout the network. Note that the term "network" refers to any two or more devices that are communicatively connected, which may include lighting systems, controllers, and processers, to facilitate the transport of information for device monitoring and control, data storage, and/or data exchange.

In some embodiments, multiple lighting systems may be coupled to the automated control system 200 (network) to implement or facilitate automated lighting applications using a variety of feedback stimuli, which may include space-illumination applications for residential, offce/workplace, retail, commercial, industrial, and outdoor environments, among others.

At least one of the building zones may include at least one type of smart device. For example, at least one of the lamps in the network may be or include at least one smart device, which may be network addressable, i.e., may have a network address. The smart device may include a sensor, which may enable sensing of at least one building zone, at least one lamp, or at least one replaceable illumination module 10.

In some embodiments, automated control system 200 may include wireless communication of temperature data. For example, one or more sensing devices, which may be or include a plurality of sensors, may sense and determine temperature in the lamp (or replaceable illumination module 10), which may wirelessly communicate corresponding temperature data to automated control system 200, which in some embodiments, may regulate temperature in the replaceable illumination module 10 via wireless automated feedback.

In some embodiments; the automated control system 200 may include centralized, web-based control to provide intuitive control that integrates with building automation systems, e.g., HVAC (heating, ventilation, and air conditioning) and security. Thus, for example, automated control system 200 may be linked with time-of-day control to turn off predetermined lamps according to a predetermined schedule. In some embodiments, the automated control system 200 may include or be linked with light level photosensors that detect available daylight and control the lighting system(s) accordingly. Alternatively, or additionally, the automated control system 200 may include or be linked to timers that automatically switch off lights after a predetermined time period.

In some embodiments, the automated control system 200 may be linked with occupancy sensors that may detect a human or animal presence, activate one or more lights in the room, and turn off the light(s) when no presence is detected, e.g., when the human or animal leaves the room. Figure 21 illustrates use of motion sensing in conjunction with an automated control system 200. In this embodiment, the automated control system 200 controls first building zone 202 and second building zone 204, where each building zone may include at least one lamp with motion sense, e.g., may include at least one sensor for motion sensing. For example, in the illustrated embodiment, first building zone 202 includes lamp 1.1 with motion sense 250 and additional lamps numerically up to lamp 1.n with motion sense 252, and second building zone 204 may include lamp 2.1 with motion sense 254 and additional lamps numerically up to lamp 2.n with motion sense 256. As with the lamps of Figure 20, in various embodiments, each lamp in Figure 21 may or may not include a heat sink 44, but preferably includes a replaceable illumination module 10.

The automated control system 200 may sense motion of an approaching material body, which may be a human, animal, or non-living object, and in response, may initiate some specified functionality with respect to the appropriate building zone prior to the arrival of material body. Thus, for example, lamp 1.1 with motion sense 250 may first sense motion of the material body, thereby activating lamp 1.n with motion sense 252, lamp 2.1 may subsequently detect the body with motion sense 254, and so forth, with lamp 2.n with motion sense 256 in a predetermined sequentially manner. In this way, illumination may automatically be provided as needed for the moving body.

In another embodiment, the automated control system 200 may sense pedestrian traffic within a building fitted with such a network of motion sensing lighting systems (lamps), and when a particular pedestrian is detected may activate at least one building zone prior to the arrival of the particular pedestrian to a predetermined building zone. The automated control system may then activate lighting along direction 280, e.g., within the first building zone 202, per the motion of the material body.

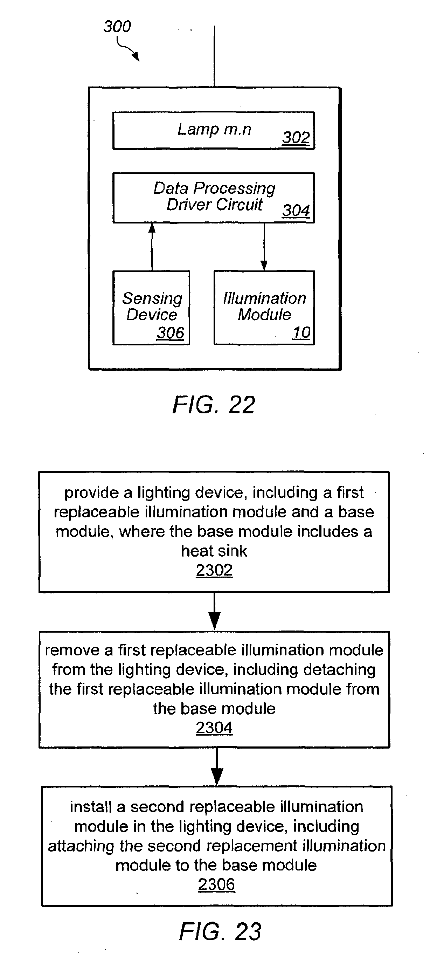

Figure 22 is a high-level block diagram of a smart light 300 with integrated sensor functionality that may be used with automated control system 200, according to one embodiment. As shown, in one embodiment, the smart light 300 may include lamp m.n 302, which refers to the network addressable functionality of the smart light, data processing driver circuit 304, sensing device 306, and illumination module 10.

The smart light 300, and particularly, lamp m.n 302, may be coupled to or included in a building zone (see, e.g., Figures 20 and 21). For example, in the illustrated embodiment, the variable letter m of lamp m.n 302 may correspond to the building zone number, and the variable letter n may designate the specific lamp coupled to or included in that particular building zone. Thus, lamp 3.2 denote the second lamp 222 of the third building zone 206 of Figure 20.

Smart light 300 may include an on-board sensing device 306, which may be controlled by data processing driver circuit 304 (per an algorithm implemented thereby) to modify and control output of replaceable illumination module 10. The smart light 300 may be networked with a host controller, which may include an algorithm function that may be remotely programmed or may be resident on the host controller.

In some embodiments, smart light 300 may include communication functions that allow the device to be used as part of a network to provide automated or "smart" illumination for commercial and residential applications, as discussed above, where, for example, a lighting zone may include smart light 300 that may be turned on or off as required by occupancy to minimize energy consumption. As also discussed above, networked and zoned smart lights may be controlled such that lighting sectors may be cascaded on and off to provide continuous illumination for people in motion in a building while reducing overall power consumption. More generally, in various embodiments, smart light 300 may be or include an addressed device that may be controlled manually, automatically, or combinations of both, depending on specific application requirements.

The sensing device 306 may be a sensor that may be a functional feature of replaceable illumination module 10. For example, sensing device 306 may sense temperature in replaceable illumination module 10 through measurement of color, motion, and/or light-intensity. The sensing device 306 may thus generate temperature data from replaceable illumination module 10, and may communicate (possibly wirelessly) that temperature data to an automated control system 200, which may be coupled to an automated control network.

In some embodiments, the smart light 300 may implement advanced functionality and control, e.g., light dimming control, via sensing device 306 and illumination module 10, where the sensing device may be incorporated in the illumination module. For example, a photosensor or other intensity monitoring device may be included in the replaceable illumination module 10, and may provide intensity feedback which may be used to modify light output of the sensing device 306 based on environmental conditions or user input.

In another embodiment, the sensing device 306 may be a color temperature monitoring sensor that may be used for automatic or user based control of the color balance of the output light. For example, sensing device 306 and associated control circuitry may control the color balance of the output light. In some embodiments, sensing device 306 (and associated control circuitry) may change the psychological or emotional 'feel' of illumination produced by the replaceable illumination module 10 in a commercial setting, or may change the tone of the output light as natural light changes throughout the day.

In one embodiment, the sensing device 306 and replaceable illumination module 10 may include or implement a "nightlight" function, where, for example, the replaceable illumination module 10 may include a low power source that may energize one or more of the solid state lighting elements 14 in replaceable illumination module 10 to produce an unobtrusive or low-level illumination. Thus, in some embodiments, illumination output from replaceable illumination module 10 may be realized with low power consumption.

As described above, in various embodiments, sensing device 306 may include any of a wide variety of sensors, including, for example, motion sensing, which may be integrated into replaceable illumination module 10 and used to provide enhanced functionality, such as providing illumination only when people are present, e.g., when high-lighting a featured product in a commercial setting. Thus, the smart light may provide illumination only when individuals are present to reduce overall power cost. In some embodiments, security motion sensing functionality of sensing device 306 may trigger illumination by the smart light if a material body, such as a human, animal, inanimate object, enters the field of view of the sensor.

The smart light 300 may include communication functions, as well. For example, communication functions implemented by smart light 300 may provide status feedback and/or remote control and programming functions, which may give the end user or automated control system 200 a means for adjusting intensity and/or color temperature remotely. The smart light 300 may utilize any of various wireless communication means such as Zigbee and other protocols, e.g., USB, or, alternatively, may communicate over an electrical power line coupled to the smart light.

As also discussed above, in some embodiments, smart light 300 may include integrated video capability. For example, smart light 300 may include a video camera that may be combined with an on-board illumination source to enhance functionality of the replaceable illumination module 10. More generally, smart light 300 may include security and loss prevention functionality, as well as commercial and residential lighting automation.

It should be noted that any of the features and components discussed above may be used in any combinations as desired. For example, in various embodiments, the lighting system may include the thermal management functionality, e.g., heat sink 44, and beam conditioning functionality, but may omit network control functionality; or may include network control and sophisticated sensor functionality, but may omit the heat sink 44, and so forth.

Described below are embodiments of methods of operation, use, and manufacture, of the lighting device.

Figure 23 is a flowchart diagram of a method for using replaceable illumination module 10, according to one embodiment. The method shown in Figure 23 may be used in conjunction with any of the devices shown in the above Figures, among other devices. In various embodiments, some of the method elements shown may be performed concurrently, in a different order than shown, or may be omitted. Additional method elements may also be performed as desired. As shown, this method may operate as follows.

First, in 2302 a lighting device may be provided, where the lighting device may include a first replaceable illumination module and a base module, described in detail above. For example, in one exemplary embodiment, the lighting device may comprise an embodiment of lighting system 100, where the base module includes heat sink 44, as well as means for electrically connecting the first replaceable illumination module to a power source, e.g., a light socket or lighting fixture.

In 2304, the first replaceable illumination module may be removed from the lighting device. For example, a user may detach the first replaceable illumination module from the base module, leaving the base module *in situ,* or may remove the lighting device, including the first replaceable illumination module and the base module, from the light socket or lighting fixture, then detach the first replaceable illumination module from the base module.

In 2306, a second replaceable illumination module may be installed in the lighting device, including attaching the second replaceable illumination module to the base module. If the base module were not removed in 2304, then the user may attach the second replaceable illumination module to the base module while the base module remains installed in the light socket or lighting fixture. Alternatively, if the base module were removed in 2304, then the user may attach the second replaceable illumination module to the base module, then re-install the entire assembly (second replaceable illumination module and base module) in the light socket or lighting fixture. Once the second replaceable illumination module (and base module) are properly installed, the lighting device may be configured to provide illumination using the second replaceable illumination module.

Note that the first replaceable illumination module and/or the second replaceable illumination module may be a replaceable illumination module 10, as described in detail above.

In some embodiments, the lighting device that may include a first replaceable illumination module and a base module coupled to the first replaceable illumination module, where the base module includes heat sink 44, and where the base module may include base connector 24 for coupling to the lighting socket.

As described above, in some embodiments, a method for use of replaceable illumination module 10 is described in the present technique. In certain embodiments, the method may include providing a lighting device in a lighting socket, removing the first replaceable illumination module, where the base module remains connected to the lighting socket after removing, and connecting a second replaceable illumination module to the base module after removing. In certain embodiments, the lighting device may include a first replaceable illumination module and a base module coupled to the first replaceable illumination module, where the base module may include heat sink 44, where the base module may include base connector 24 for coupling to the lighting socket. In some embodiments, after connecting the second replaceable illumination module to the base module, the lighting device may be configured to provide illumination using the second replaceable illumination module.

Figure 24 illustrates one embodiment of a method of operating a lighting system, e.g., lighting system 100. In various embodiments, some of the method elements shown may be performed concurrently, in a different order than shown, or may be omitted. Additional method elements may also be performed as desired. As shown, this method may operate as follows.

In 2402, power may be received to an electrical connector of a replaceable illumination module from an external power source. For example, the replaceable illumination module may be replaceable illumination module 10, and the electrical connector may be electrical connector 42, both of which may be included in a lighting system 100, embodiments of which are described above in detail.

In 2404, power may be provided to a printed circuit board, e.g., printed circuit board 18, of the replaceable illumination module via the electrical connector.

In 2406 power may be provided via printed circuit board to one or more solid state lighting elements 14 of the replaceable illumination module, e.g., to one or more LEDs.

In 2408, light may be emitted via the one or more solid state lighting elements 14.

In 2410, at least a portion of the emitted light from one or more solid state lighting elements 14 may be transformed via one or more beam conditioning optical elements, such as beam conditioning optical elements 32, which may be included in the replaceable illumination module.

Finally, in 2412, heat may be conducted from the one or more solid state lighting elements to a heat sink, such as heat sink 44. In one embodiment, the heat may be conducted via an interface surface of a thermal spreading element 16, as described above in detail. Thus, in some embodiments, printed circuit board 18 may connect to one or more solid state lighting elements 14 of replaceable illumination module 10, and may further include or be connected to thermal spreading element 16, where thermal spreading element 16 may include the interface surface for thermally connecting to a heat sink.

Figure 25 is a flowchart diagram of a method for operating a controllable lighting system, according to one embodiment. As with the above methods, in various embodiments, some of the method elements shown may be performed concurrently, in a different order than shown, or may be omitted. Additional method elements may also be performed as desired. As shown, this method may operate as follows.

As Figure 25 indicates, in 2502 a controllable lighting system may be provided. The controllable lighting system may include replaceable illumination module 10, one or more sensors coupled to or included in the replaceable illumination module 10, and control circuitry coupled to or included in replaceable illumination module 10. Various embodiments of the replaceable illumination module 10 are described above in detail.

In 2504, one or more attributes of replaceable illumination module 10 or its environment may be monitored via the one or more sensors and the control circuitry to determine a status of the controllable lighting system.

In 2506, the controllable lighting system may be regulated, or a system coupled to the controllable lighting system may be controlled, based on the determined status. As described above in detail, in various embodiments, the controllable lighting system may be a standalone device that utilizes the sensors and control circuitry to control itself, or may be communicatively coupled (possibly wirelessly) to or included in a larger system, such as an automated control network, where, for example, the controllable lighting system may communicate status information to an automated controller on the network, and the automated controller may control the controllable lighting system accordingly. In other words, the method may include sending the determined status to a controller of the automated control network and receiving signals from the controller of the automated control network, where regulating is performed in response to the signals.

Alternatively, or additionally, the controllable lighting system may detect a condition or determine a status of the lighting system or its environment via the one or more sensors, and may report the condition or status to a controller, which may then control some other system, e.g., a security system, based on the reported condition or status. Various embodiments of a controllable lighting system and its uses are described in detail above with reference to Figures 20-22. Of course, these are but exemplary embodiments of the method, and are not intended to limit the use or implementation of the controllable lighting system to any particular form, function, or use.

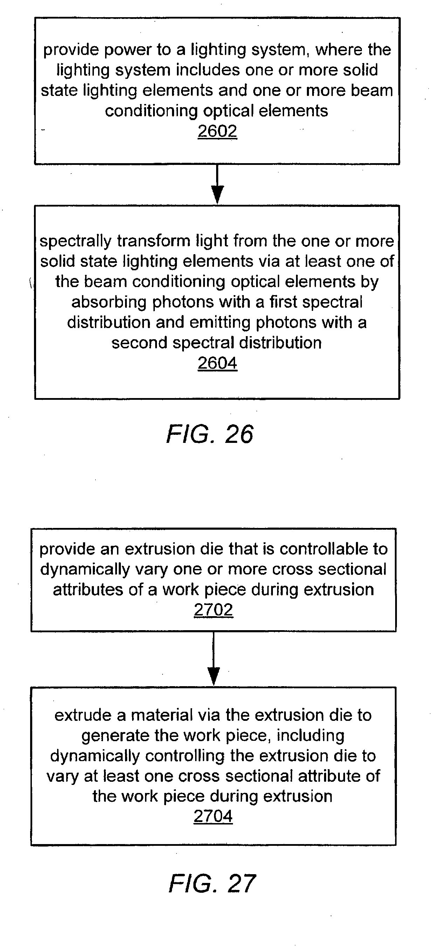

Figure 26 is a flowchart diagram of a method for beam conditioning in a lighting system, according to one embodiment. As with the above methods, in various embodiments, some of the method elements shown may be performed concurrently, in a different order than shown, or may be omitted. Additional method elements may also be performed as desired. As shown, this method may operate as follows.

In 2602, power may be provided to a lighting system. The lighting system may include one or more solid state lighting elements 14, e.g., LEDs, a printed circuit board, such as printed circuit board 18, and one or more beam conditioning optical elements, such as beam conditioning optical elements 32, various embodiments of which are described above in detail. For example, the one or more beam conditioning optical elements may include one or more of: a phosphor material, a nanophotonic material, a crystalline photonic material, an optical fiber material, a photonic crystal fiber material, an engineered microstructure material, or a dielectric waveguide material, among others. In some embodiments, the lighting system may be an embodiment of lighting system 100, described in detail above.

In 2604, light from the one or more solid state lighting elements may be spectrally transformed via at least one of the beam conditioning optical elements. More specifically, the beam conditioning optical element(s) may absorb photons with a first spectral distribution (from the one or more solid state lighting elements), and emit photons with a second spectral distribution, e.g., per some specified or desired attributes of the illumination.

As discussed above, in some embodiments, one or more beam conditioning optical elements 32 may be proximate to one or more solid state lighting elements 14 for generating a specified beam. Moreover, in some embodiments, the one or more beam conditioning optical elements 32 may include one or more beam forming elements configured to modify a spatial intensity distribution of the photons of the second spectral distribution for control of beam concentration or beam divergence. Examples of such beam forming elements include reflective optical elements, e.g., parabolic reflectors for light collection and directional beam output, diffractive optical elements, e.g., Fresnel lenses, or refractive elements, e.g., prism structures that use total internal reflectance to control and minimize beam divergence. Note that these particular elements are meant to be exemplary only, and are not intended to limit the beam conditioning optical elements to any particular devices or functionalities.

As discussed above in detail, sensors and control circuitry may be used to monitor spectral distribution or intensity distribution of spectrally transformed light from one or more solid state lighting elements 14 via the one or more sensors and modify at least one of the beam conditioning optical elements 32 to control color temperature or intensity distribution of the beam. The one or more sensors may include one or more of: a photosensor, a color sensor, or a light-intensity sensor. Additionally, in some embodiments, the control circuitry may be configured to couple to an automated control network for regulation of color output or light-intensity output of the lighting system by the automated control network. As another exemplary use, and as described above, the one or more solid state lighting elements 14 may include at least two different types of solid state lighting elements 14, each with a respective specified spectral output. At least one of the beam conditioning optical elements 32 may be configured to homogenize light output from the solid state lighting elements 14.

Manufacturing

As indicated above, in some embodiments, heat sink 44 may be a work piece formed by a novel method of manufacturing.

Figure 27 flowcharts one embodiment of a method for manufacturing a work utilizing a dynamically controllable extrusion die. As with the above methods, in various embodiments, some of the method elements shown may be performed concurrently, in a different order than shown, or may be omitted. Additional method elements may also be performed as desired. As shown, this method may operate as follows.

In 2702 an extrusion die may be provided that may be controllable to dynamically vary one or more cross sectional attributes of the work piece. In other words, while prior art extrusion dies generally produce work pieces with constant cross-sectional attributes, such as cross-sectional radii or proportions, orientation, etc., whereas the present extrusion die may be operable to vary one or more of these attributes during the extrusion process.

In 2704, a material may be extruded via the extrusion die to generate the work piece. The extruding may include dynamically controlling the extrusion die to vary at least one cross sectional attribute of the work piece during extruding. Thus, the generated work piece may have a variable longitudinal profile in accordance with the dynamically controlling the extrusion die.

For example, in one embodiment, the dynamically controllable extrusion die may be included in a dynamically controllable extrusion die system, which may include a controller and the extrusion die coupled to the controller, which may be configured to dynamically control the extrusion die to generate the work piece. For example, to dynamically control the extrusion die, the controller may be configured to send control signals to modify the extrusion die to vary one or more cross sectional attributes of the work piece during extrusion. The extrusion die may be configured to receive the control signals and vary the one or more cross sectional attributes of the work piece during extrusion in accordance with the control signals, thereby imparting a variable longitudinal profile to the work piece. Note that the sending control signals may be performed one or more times in an iterative manner to dynamically control the extrusion process. In one embodiment, sensors may be employed in or near the die to provide feedback to the controller regarding the state of the die, the extrusion, and/or the immediate environment, thereby allowing the controller to modify the commands sent to the die dynamically, e.g., "on the fly".

Figure 9, described above, illustrates an exemplary work piece with a varying longitudinal cross-section. In some embodiments, dynamically controlling the extrusion die may include varying a cross section of the extrusion die to taper the work piece, thereby generating a tapered work piece, as shown in Figure 9. Thus, in some embodiments, the at least one extrusion may include a tapered extrusion. In some embodiments, the work piece may be or include heat sink 44, which may include at least one extrusion, which, as noted above, may include a plurality of heat fins 46 (see, e.g., Figures 7 and 8). Details regarding properties of the heat sink 44 are presented above.

The extrusion die may be controllable to implement a variable constriction, and so may be used to form a shaped heat sink, e.g., a tapered heat sink with a decreasing diameter along the extrusion axis. In certain embodiments, the shaped heat sink may include both functional form factor aspects and desirable aesthetics.

Dynamically controlling the extrusion die may include rotating the extrusion die during extrusion to impart a twist to the work piece. Figure 10, described above in detail, illustrates an exemplary work piece that is both tapered and twisted. Note that twisting the extrusion (along a predetermined heat sink axis) may increase heat fin 46 surface area in a given volume, and thus may improve or even optimize heat transfer via the heat fins 46. In one embodiment, the twisting process may impart a bell shape, lamp shape, turnip shape, or other desired shape, to the heat sink 44.

In some embodiments, the heat sink 44 may include a plurality of extrusions, e.g., a plurality of stacked extrusions, where each stacked extrusion may have a respective radius, and where the plurality of stacked extrusions may be ordered in accordance with their respective radii to form a stepwise tapered heat sink 44. In certain embodiments, the heat fins 46 of at least one of the plurality of stacked extrusion may not be aligned with corresponding heat fins 46 of at least one adjacent stacked extrusion. In various embodiments, the stacked extrusions may produced separately and bonded or otherwise connected together, or, alternatively, may be formed sequentially, e.g., with step-wise modification of the radii at the junctures between the extrusions. The method for manufacturing a work piece may also include thermally modifying the material during the extruding, e.g., heating the extrusion die.

In one embodiment, program instructions implementing the above dynamic control of the extrusion die may be stored on a non-transitory memory medium. The program instructions may be stored on the controller, and executed by a processor of the controller to perform embodiments of the above method of manufacture.

Additional steps or techniques may also be used to generate the work piece (e.g., heat sink). For example, the method may include utilizing a forming wheel to modify each of the plurality of heat fins 46. In certain embodiments, the method for manufacturing a work piece may include applying a braising paste or a furnace bake to the generated work piece. As another example, after the above extruding, the method may further include thermally heating the work piece and/or compressing the work piece into a mold or a forming structure. For example, compressing the work piece may include forming one or more tapers or notches. In some embodiments, the heat fins 46 may be formed via a thermomechanical forming process that may reshape an existing extrusion using a negative form of the desired shape, e.g., a mold. Additionally, or alternatively, the work piece may be rotated into a mold or a forming structure. In various embodiments, the forming structure may be fixed, or may be articulated. In further embodiments, forming the heat sink 44 may include post processing of the cut extrusions.

Thus, the heat sink 44, and heat fins 46 specifically, may be shaped and modified during extrusion and/or in a post extrusion process. In other words, the tapered extrusion(s) of heat sink 44 may be formed at least in part via the dynamically controlled extrusion process disclosed above. In certain embodiments, modification of the extrusion shape of the heat sink 44 may conform to ANSI form factors. Moreover, modification of the extrusion shape of heat sink 44 as described herein may achieve sufficient surface area of the heat sink 44 for highly effective heat transfer from the solid state lighting elements 14 of lighting system 100.

For example, the heat sink 44 may be an extruded heat sink with a reduced void density that may be achievable by the extrusion process, resulting in superior heat conduction over cast heat sinks. In some embodiments, the particular extrusion alloy used may be selected based on a combination of extrusion performance and thermal conductivity parameters. For example, in some embodiments, heat sink 44 may be made of an aluminum material, e.g., aluminum or an aluminum compound or alloy.

Assembly

In some embodiments, the manufacture and assembly of heat sink 44 with replaceable illumination module 10 may include modular design and modular fabrication methods. For example, the manufacture and assembly of heat sink 44 with replaceable illumination module 10 may minimize parts count and control cost. In some embodiments, joining methods to join heat sink 44 to shaft and base connector assembly 50 may optimize heat transfer between modular components and provide sufficient thermal management to maintain proper operation of the lighting system.

In one embodiment, heat sink 44 may be frictionally interfaced to replaceable illumination module 10, thereby creating a thermal bond. In other exemplary embodiments, heat sink 44 may be thermally bonded with a fastening method to replaceable illumination module 10 to provide an interface with a predetermined separation distance, which may be less than $5\times10^{-5}$ meters. For example, a press fit may minimize contact gaps and consequently reduce thermal conductivity resistance.

In further embodiments, joining methods, such as braising paste and furnace bake, may form a continuous interface between heat sink 44 and replaceable illumination module 10 to promote thermal transport. Additionally, or alternatively, heat transfer potting compounds and thermally conductive pads may join heat sink 44 with replaceable illumination module 10.

The features and functions described herein provide for various embodiments of a novel and useful lighting system. Although various embodiments which incorporate the teachings of the present disclosure have been shown and described in detail herein, those skilled in the art may readily devise many other varied embodiments that still incorporate these teachings. The foregoing description of the preferred embodiments, therefore, is provided to enable any person skilled in the art to make or use the claimed subject matter.

The generic principles defined herein may be applied to other embodiments without the use of the innovative faculty. Thus, the claimed subject matter is not intended to be limited to the embodiments shown herein, but is to be accorded the widest scope consistent with the principles and novel features disclosed herein.

Reference in the specification to "one embodiment", "an embodiment", "some embodiments", or "certain embodiments", means that a particular feature, structure, characteristics, or method described in connection with the embodiments is included in at least some embodiments, but not necessarily all embodiments. The various appearances of "one embodiment", "an embodiment", "some embodiments", or "certain embodiments" are not necessarily all referring to the same embodiments.

Reference in the specification to "approximately" means within a specified tolerance, which in various embodiments may be, for example, within ten percent, within five percent, or within one percent, and so forth, depending on the application.

Furthermore, note that the word "may" is used throughout this application in a permissive sense (e.g., having the potential to, being able to), not a mandatory sense (e.g., must). The term "include", and derivations thereof, mean "including, but not limited to". As used in this specification, the singular forms "a", "an" and "the" include plural referents unless the content clearly indicates otherwise. Thus, for example, reference to "a device" includes a combination of two or more devices. The term "coupled" means "directly or indirectly connected". The term "or" as used herein is intended to be inclusive unless otherwise indicated.

All references cited herein, including publications, patent applications, and patents, are hereby incorporated by reference as though fully and completely set forth hierein.

**Claims**

**1.** A thermal management lighting system (100) comprising:

a replaceable illumination module (10) comprising:

one or more solid state lighting elements (14),
a printed circuit board (18) electrically and thermally connected to the one or more solid state lighting elements (14) wherein the printed circuit board (18) comprises or is connected to a thermal spreading element (16), and

a base module (15) wherein the replaceable illumination module (10) is removably coupled to the base module (15) wherein the base module (15) comprises a heat sink (44), wherein the heat sink (44) is in thermal contact with the replaceable illumination module (10) via the thermal spreading element (16), wherein the heat sink (44) dissipates heat generated by the one or more solid state lighting elements (14) during operation; **characterized by** a cover cap (38) affixed to the printed circuit board (18), wherein the cover cap (38) protects the one or more solid state lighting elements (14) and the circuit board (18) from the environmental intrusions; and
a shaft and base connector assembly (50) for coupling to the replaceable illumination module comprising:

a base connector (24), mechanically coupled to but electrically isolated from the heat sink (44), wherein the base connector (24) is configured to receive power from a lighting socket during operation;
a shaft (60),
a base adaptor (64), wherein the base adaptor (64) couples the base connector (24) to the shaft (60); and
base module circuitry (22) wherein the base module circuitry (22) comprises one or more of:

power conditioning circuitry; or
control circuitry;

wherein the heat sink (44) is coupled to the shaft and base connector assembly (50) with an interference fit;
wherein the heat sink (44) comprises a plurality of stacked extrusions, wherein each stacked extrusion has a respective radius, wherein the plurality of stacked extrusions are ordered in accordance with their respective radii to form a stepwise tapered heat sink.

2. The thermal management lighting system of claim 1, wherein at least a portion of the cover cap is made of a smart material to block moisture and while supporting convective heat transfer, wherein the smart material comprises one or more of:

a thermally conductive material with thermal conductivity of at least approximately 0.9 W/m-K; or
a porous material with a pore density of at least approximately $10^7$ pores/cm$^2$.

3. The thermal management lighting system of claim 1, further comprising:

a flow baffle, wherein the flow baffle encircles the heat sink and is configured to utilize a temperature differential to promote convective heat transfer away from the heat sink.

4. The thermal management lighting system of claim 1, wherein each extrusion comprises a plurality of heat fins;
wherein the plurality of heat fins is made of a material 'with a thermal conductivity of at least approximately 180 W /m-K;
wherein each heat fin comprises a specified nonzero curvature; and
wherein the plurality of heat fins forms a plurality of air flow channels for convectively dissipating heat.

5. The thermal management lighting system of claim 1, further comprising an active cooling element coupled to or comprised in the replaceable illumination module, wherein the active cooling element comprises one or more of:

a thermoelectric cooler;
a phase-change device;
a fan;
a piezoelectric fan;
a voice coil based flipper fan;
a synthetic jet cooler; or
an acoustically-driven cooler.

6. The thermal management lighting system of claim 1, further comprising:

a passive cooling element coupled to or comprised in the replaceable illumination module, wherein the passive cooling element comprises one or more of:

a heat pipe;
a Venturi effect device; or
a convective flow device.

7. The thermal management lighting system of claim 1, further comprising:

at least one sensor, comprised in or coupled to the replaceable illumination module or the heat sink, wherein the at least one sensor is configured to couple to an automated control network via wired or wireless communication for regulation of color output, light-intensity output, or temperature in the replaceable illumination module by the automated control network.

8. The thermal management lighting system of claim 1, further comprising:

one or more beam conditioning optical elements proximate to the one or more solid state lighting elements for generating a specified beam, wherein at least one of the one or more beam conditioning optical elements is configured to spectrally transform light from the one or more solid state lighting elements by absorbing photons with a first spectral distribution and emitting photons with a second spectral distribution.

9. The thermal management lighting system of claim 8, wherein the at least one of the one or more beam conditioning optical elements comprises one or more of:

a phosphor material;
a nanophotonic material;
a crystalline photonic material;
an optical fiber material;
a photonic crystal fiber material;
an engineered microstructure material; or
a dielectric waveguide material.

10. The thermal management lighting system of claim 8, further comprising:

one or more sensors proximate to the one or more beam conditioning optical elements; and
control circuitry coupled to the one or more sensors, wherein the control circuitry is configured to:

monitor spectral distribution or intensity distribution of spectrally transformed light from the one or more solid state lighting elements via the one or more sensors; and
modify at least one or more of the beam conditioning optical elements to control color temperature or intensity distribution of the beam.

11. The thermal management lighting system of claim 8, wherein the one or more solid state lighting elements comprise a plurality of solid state lighting elements, wherein at least two of the plurality of solid state lighting elements each comprises a respective specified spectral output, and wherein at least one of the one or more beam conditioning optical elements is configured to homogenize light output from the plurality of solid state lighting elements.

12. The thermal management lighting system of claim 1, further comprising:

one or more sensors coupled to or comprised in the replaceable illumination module, wherein the one or more sensors are configured to measure one or more attributes of the replaceable illumination module or its environment; and
the control circuit, coupled to the replaceable illumination module, wherein the control circuitry is configured to:

monitor the one or more attributes to determine a status of the thermal management lighting system via the one or more sensors, wherein the status is useable to regulate the controllable lighting system or control a system coupled to the controllable lighting system.

13. The thermal management lighting system of claim 12, wherein the control circuitry is configured to couple to an automated control network for network control or monitoring of the controllable lighting system.

14. The thermal management lighting system of claim 12, further comprising:

one or more of:

a video camera;
a still camera;
a motion detector;
a smoke detector;
a chemical sensor; or
a carbon monoxide detector.

15. A method, comprising:

providing a lighting device, wherein the lighting device comprises:

a first replaceable illumination module, comprising:

one or more solid state lighting elements; and
a printed circuit board, electrically and thermally connected to the one or more solid state lighting elements, wherein the printed circuit board comprises or is connected to a thermal spreading element; and

a cover cap affixed to the printed circuit board, wherein the cover cap protects the one or more solid state lighting elements and the circuit board from environmental intrusions; and

a base module, comprising:

a heat sink thermally connected to the first replaceable illumination module via the thermal spreading element, wherein the heat sink dissipates heat generated by the one or more solid state lighting elements during operation, wherein the heat sink comprises a plurality of stacked extrusions, wherein each stacked extrusion has a respective radius, and wherein the plurality of stacked extrusions are ordered in accordance with their respective radii to form a stepwise tapered heat sink; and a shaft and base connector assembly, comprising:

a base connector, mechanically coupled to but electrically isolated from the heat sink, wherein the base connector is configured to receive power from a lighting socket during operation;
a shaft;
a base adaptor, wherein the base adaptor couples the base connector to the shaft; and
base module circuitry, coupled to the base adaptor, wherein the base module circuitry comprises one or more of:

power conditioning circuitry; or control circuitry;

wherein the heat sink is coupled to the shaft and base connector assembly with an interference fit;

removing the first replaceable illumination module from the lighting device, including detaching the first replaceable illumination module from the base module; and
installing a second replaceable illumination module in the lighting device, including attaching the second replacement illumination module to the base module, wherein, after said installing the second replaceable illumination module, the lighting device is configured to provide illumination using the second replacement illumination module.

**Patentansprüche**

1. Beleuchtungssystem (100) mit Wärmemanagement, umfassend:

ein austauschbares Beleuchtungsmodul (10), umfassend:

ein oder mehrere Festkörper-Beleuchtungselemente (14),
eine gedruckte Leiterplatte (18), die elektrisch und thermisch mit dem einen oder mehreren Festkörper-Beleuchtungselementen (14) verbunden ist, wobei die gedruckte Leiterplatte (18) ein Wärmeverteilelement (16) aufweist oder mit einem solchen verbunden ist; und

ein Basismodul (15), wobei das austauschbare Beleuchtungsmodul (10) lösbar mit dem Basismodul (15) gekoppelt ist, wobei das Basismodul (15) einen Kühlkörper (44) umfasst, wobei der Kühlkörper (44) über das Wärmeverteilelement (16) in thermischem Kontakt mit dem austauschbaren Beleuchtungsmodul (10) steht, wobei der Kühlkörper (44) Wärme, die von dem einen oder den mehreren Festkörper-Beleuchtungselementen (14) im Betrieb erzeugt wird, abführt;
**gekennzeichnet durch**
eine an der gedruckten Leiterplatte (18) befestigte Abdeckkappe (38), wobei die Abdeckkappe (38) das eine oder die mehreren Festkörper-Beleuchtungselemente (14) und die gedruckte Leiterplatte (18) vor Umwelteinflüssen schützt; und
eine Schaft-und-Anschlusssockel-Verbindungsanordnung (50) zur Kopplung mit dem austauschbaren Beleuchtungsmodul (10), umfassend:

einen Anschlusssockel (24), der mechanisch mit dem Kühlkörper (44) verbunden jedoch elektrisch gegenüber diesem isoliert ist, wobei der Anschlusssockel (24) derart konfiguriert ist, um im Betrieb Strom aus einer Lampenfassung zu beziehen;
einen Schaft (60);
Sockeladapter (64), wobei der Sockeladapter (64) den Anschlusssockel (24) mit dem Schaft (60) koppelt; und
eine Basismodulschaltung (22), wobei die Basismodulschaltung (22) eines oder mehrere des Folgenden umfasst:

eine Stromaufbereitungsschaltung; oder
eine Steuerschaltung;

wobei der Kühlkörper (44) mit der Schaft-und-Anschlusssockel-Verbindungsanordnung (50) mittels einer Presspassung gekoppelt ist; wobei der Kühlkörper (44) eine Vielzahl von gestapelten Strangpresserzeugnissen aufweist, wobei jedes der gestapelten Strangpresserzeugnisse einen eigenen Radius aufweist, wobei die Vielzahl von gestapelten Strangpresserzeugnissen entsprechend ihren Radien geordnet sind, um eine sich stufenförmig verjüngende Wärmesenke zu bilden.

2. Beleuchtungssystem mit Wärmemanagement nach Anspruch 1, wobei zumindest ein Abschnitt der Abdeckkappe aus einem intelligenten Werkstoff besteht um Feuchtigkeit zu stoppen und gleichwohl einen konvektiven Wärmeübergang zu unterstützen, wobei der intelligente Werkstoff eines oder mehrere des Folgenden umfasst:

einen thermisch leitfähigen Werkstoff mit einer Wärmeleitfähigkeit von zumindest etwa 0,9 W/mK; oder
einen porösen Werkstoff mit einer Porendichte von zumindest etwa $10^7$ Poren/cm$^3$.

3. Beleuchtungssystem mit Wärmemanagement nach Anspruch 1, weiterhin umfassend:

eine Strömungsblende, wobei die Strömungsblende den Kühlkörper umgibt und derart konfiguriert ist, um eine Temperaturdifferenz zu nutzen, um einen konvektiven Wärmeaustausch von dem Kühlkörper weg zu unterstützen.

4. Beleuchtungssystem mit Wärmemanagement nach Anspruch 1, wobei jedes Strangpresserzeugniss eine Vielzahl von Wärmeflügeln aufweist; wobei die Vielzahl von Wärmeflügeln aus einem Werkstoff mit einer Wärmeleitfähigkeit von zumindest etwa 180 W/mK besteht; wobei jeder Wärmeflügel eine von Null verschiedene Krümmung aufweist; und wobei die Vielzahl von Wärmeflügeln eine Vielzahl von Luftdurchströmkanälen zur konvektiven Wärmeableitung bildet.

5. Beleuchtungssystem mit Wärmemanagement nach Anspruch 1, weiterhin umfassend ein aktives Kühlelement, das mit dem austauschbaren Beleuchtungsmodul gekoppelt oder in diesem enthalten ist, wobei das aktive Kühlelement eines oder mehrere des Folgenden umfasst:

einen thermoelektrischen Kühler;
eine Phasenwechselvorrichtung;
einen Ventilator;

einen piezoelektrischen Ventilator;
einen Schwingspulenlüfter;
einen Synthetic-Jet-Kühler; oder
einen Schallwellenkühler.

6. Beleuchtungssystem mit Wärmemanagement nach Anspruch 1, weiterhin umfassend ein passives Kühlelement, das mit dem austauschbaren Beleuchtungsmodul gekoppelt oder in diesem enthalten ist, wobei das passive Kühlelement eines oder mehrere des Folgenden umfasst:

ein Wärmerohr;
eine Venturi-Effekt-Vorrichtung; oder
eine Konvektionsstromvorrichtung.

7. Beleuchtungssystem mit Wärmemanagement nach Anspruch 1, weiterhin umfassend:

mindestens einen Sensor, der mit dem austauschbaren Beleuchtungsmodul oder dem Kühlkörper gekoppelt oder in diesem enthalten ist, wobei der mindestens eine Sensor mit einem automatisierten Steuerungsnetzwerk kabelgebunden oder kabellos koppelbar ist, um die Beleuchtungsfarbe, die Lichtintensität oder die Temperatur in dem austauschbaren Beleuchtungsmodul mithilfe des automatisierten Steuerungsnetzwerks zu regulieren.

8. Beleuchtungssystem mit Wärmemanagement nach Anspruch 1, weiterhin umfassend:

ein oder mehrere optische Strahlformungselemente benachbart des einen oder der mehreren Festkörper-Beleuchtungselemente zur Erzeugung eines bestimmten Strahls, wobei mindestens eines der ein oder mehreren optischen Strahlformungselemente derart konfiguriert ist, um Licht des einen oder der mehreren Festkörper-Beleuchtungselemente zu transformieren durch Absorption von Photonen mit einer ersten Spektralverteilung und Emission von Photonen mit einer zweiten Spektralverteilung.

9. Beleuchtungssystem mit Wärmemanagement nach Anspruch 8, bei dem das mindestens eine der ein oder mehreren optischen Strahlformungselemente eines oder mehrere des Folgenden umfasst:

ein Phosphormaterial;
ein Nanophotonikmaterial;
ein photonisches Kristallmaterial;
ein optisches Fasermaterial;
ein photonisches Kristallfasermaterial;
ein technisches Mikrostrukturmaterial; oder
ein dielektrisches Wellenleitermaterial.

10. Beleuchtungssystem mit Wärmemanagement nach Anspruch 8, weiterhin umfassend:

eine oder mehrere Sensoren benachbart des einen oder der mehreren optischen Strahlformungselemente; und
eine Steuerschaltung, die mit dem einen oder den mehreren Sensoren gekoppelt ist, wobei die Steuerschaltung derart konfiguriert ist, um:

die Spektralverteilung oder die Intensitätsverteilung spektral transformierten Lichts von dem einen oder den mehreren Festkörper-Beleuchtungselementen mittels des einen oder der mehreren Sensoren zu überwachen; und
zumindest eines des einen oder der mehreren optischen Strahlformungselemente zu modifizieren, um die Farbtemperatur oder die Intensitätsverteilung des Strahls zu regeln oder zu steuern.

11. Beleuchtungssystem mit Wärmemanagement nach Anspruch 8, bei dem das eine oder die mehreren Festkörper-Beleuchtungselemente eine Vielzahl von Festkörper-Beleuchtungselementen umfassen, wobei zumindest zwei der Vielzahl von Festkörper-Beleuchtungselementen jeweils eine eigene spezielle Spektralleistung aufweisen, und wobei zumindest eines des einen oder der mehreren optischen Strahlformungselemente derart konfiguriert ist, um die Lichtleistung der Vielzahl von Festkörper-Beleuchtungselementen zu vergleichmäßigen.

12. Beleuchtungssystem mit Wärmemanagement nach Anspruch 1, weiterhin umfassend:

einen oder mehrere Sensoren, der oder die mit dem austauschbaren Beleuchtungsmodul gekoppelt oder in diesem enthalten ist oder sind, wobei der eine oder die mehreren Sensoren derart konfiguriert ist oder sind, um eine oder mehrere Eigenschaften des austauschbaren Beleuchtungsmoduls oder seiner Umgebung zu messen; und
die Steuerschaltung, welche mit dem austauschbaren Beleuchtungsmodul gekoppelt ist, wobei die Steuerschaltung derart konfiguriert ist, um:

die eine oder die mehreren Eigenschaften zu überwachen und einen Zustand des Beleuchtungssystems mit Wärmemanagement mittels des einen oder der mehreren Sensoren zu bestimmen, wobei der Zustand dazu verwendbar ist, um das steuerbare Beleuchtungssystem zu regulieren oder ein mit dem steuerbaren Beleuchtungssystem gekoppeltes System zu steuern oder zu regeln.

13. Beleuchtungssystem mit Wärmemanagement nach Anspruch 12, bei dem die Steuerschaltung an ein automatisiertes Steuerungsnetzwerk zur Netzwerksteuerung oder zum Überwachen des steuerbaren Beleuchtungssystems anschließbar ist.

14. Beleuchtungssystem mit Wärmemanagement nach Anspruch 12, weiterhin umfassend:

eines oder mehrere des Folgenden:

eine Videokamera;
eine Fotokamera;
einen Bewegungsmelder;
einen Rauchdetektor;
einen chemischen Sensor; oder
einen Kohlenmonoxidsensor.

15. Verfahren, umfassend:

Bereitstellen einer Beleuchtungsvorrichtung, wobei die Beleuchtungsvorrichtung umfasst:

ein erstes austauschbares Beleuchtungsmodul, umfassend:

ein oder mehrere Festkörper-Beleuchtungselemente;
eine gedruckte Leiterplatte, die elektrisch und thermisch mit dem einen oder den mehreren Festkörper-Beleuchtungselementen verbunden ist, wobei die gedruckte Leiterplatte ein Wärmeverteilelement aufweist oder mit einem solchen verbunden ist; und
eine an der gedruckten Leiterplatte befestigte Abdeckkappe, wobei die Abdeckkappe das eine oder die mehreren Festkörper-Beleuchtungselemente und die gedruckte Leiterplatte vor Umwelteinflüssen schützt; und

ein Basismodul, umfassend:

einen Kühlkörper, der über das Wärmeverteilelement thermisch mit dem ersten austauschbaren Beleuchtungsmodul verbunden ist, wobei der Kühlkörper Wärme, die von dem einen oder den mehreren Festkörper-Beleuchtungselementen im Betrieb erzeugt wird, abführt, wobei der Kühlkörper eine Vielzahl von gestapelten Strangpresserzeugnissen aufweist, wobei jedes der gestapelten Strangpresserzeugnisse einen eigenen Radius aufweist, und wobei die Vielzahl von gestapelten Strangpresserzeugnissen entsprechend ihren Radien geordnet sind, um eine sich stufenförmig verjüngende Wärmesenke zu bilden; und eine Schaft-und-Anschlusssockel-Verbindungsanordnung, umfassend:

einen Anschlusssockel, der mechanisch mit dem Kühlkörper verbunden jedoch elektrisch gegenüber diesem isoliert ist, wobei der Anschlusssockel derart konfiguriert ist, um im Betrieb Strom aus einer Lampenfassung zu beziehen;
einen Schaft;
Sockeladapter, wobei der Sockeladapter den Anschlusssockel mit dem Schaft koppelt; und
eine Basismodulschaltung, die mit dem Sockeladapter gekoppelt ist, wobei die Basismodulschaltung eines oder mehrere des Folgenden umfasst:

eine Stromaufbereitungsschaltung; oder
eine Steuerschaltung;

wobei der Kühlkörper mit der Schaft-und-Anschlusssockel-Verbindungsanordnung mittels einer Presspassung gekoppelt ist;

Entfernen des ersten austauschbaren Beleuchtungsmoduls von der Beleuchtungsvorrichtung, welches ein Lösen des ersten austauschbaren Beleuchtungsmoduls von dem Basismodul beinhaltet;
Installieren eines zweiten austauschbaren Beleuchtungsmoduls in der Beleuchtungsvorrichtung, welches ein Anbringen des zweiten austauschbaren Beleuchtungsmoduls an dem Basismodul beinhaltet, wobei nach dem Installieren des zweiten austauschbaren Beleuchtungsmoduls die Beleuchtungsvorrichtung derart konfiguriert ist, um eine Beleuchtung unter Verwendung des zweiten austauschbaren Beleuchtungsmoduls bereitzustellen.

## Revendications

**1.** Un système de gestion thermique d'éclairage (100) comportant :

un module d'éclairage remplaçable (10), comportant :

un ou plusieurs éléments d'éclairage par semi-conducteurs (14)
une carte de circuit imprimé (18), connectée électroniquement et thermiquement à un ou plusieurs éléments d'éclairage par semi-conducteurs (14), ladite carte de circuit imprimé (18) comprend, ou est connectée à, un élément de diffusion thermique (16) ;
un module de base (15), avec lequel le module d'éclairage remplaçable (10) est couplé de façon amovible ; ledit module de base (15) comporte un dissipateur de chaleur (44) ; ledit dissipateur de chaleur (44) est en contact thermique avec le module d'éclairage remplaçable (10) grâce à l'élément de diffusion thermique (16) ; ledit dissipateur à chaleur (44) qui dissipe la chaleur générée par un ou plusieurs éléments d'éclairage par semi-conducteurs (14) pendant le fonctionnement est **caractérisé par** :

un couvercle (38) fixé sur la carte de circuit imprimé (18), ledit couvercle (38) protège un ou plusieurs éléments d'éclairage par semi-conducteurs (14) ainsi que la carte de circuit imprimé (18) d'intrusions environnementales ; et
un assemblage de l'arbre (60) et du connecteur de base (50) pour l'accouplement au module d'éclairage remplaçable, comportant :

un connecteur de base (24) couplé mécaniquement avec, mais isolé électriquement du, dissipateur de chaleur (44) ; ledit connecteur de base (24) est configuré pour recevoir le courant d'une prise d'éclairage pendant le fonctionnement ;
un arbre (60),
un adaptateur de base (64), ledit adaptateur de base (64) permettant de coupler le connecteur de base (24) avec l'arbre (60) ; et
un ensemble de circuits électroniques (22) ledit ensemble de circuits électroniques (22) comporte un ou plusieurs circuits électroniques de conditionnement du courant ; ou circuits électroniques de commande ;

ledit dissipateur de chaleur (44) est couplé à l'assemblage du connecteur de base (24) et de l'arbre (50) par ajustement serré ;
ledit dissipateur de chaleur (44) comporte une pluralité d'extrusions empilées (26), chaque extrusion empilée (26) ayant un radius respectif ; lesdites pluralités d'extrusions empilées sont ordonnées en escalier selon leur radius respectif pour donner au dissipateur de chaleur (44) une forme pyramidale tronquée.

2. Le système de gestion thermique d'éclairage selon la revendication 1, dont au moins une portion du couvercle est fait de matériau intelligent pour bloquer l'humidité tout en permettant le transfert de chaleur par convection, ledit matériau intelligent comporte un ou plusieurs de :

   un matériau à conduction thermique dont la conductivité thermique est d'au moins 0,9 W/m-K, approximativement ; ou
   un matériau poreux dont la densité poreuse est d'au moins $10^7$ pores/cm$^2$.

3. Le système de gestion thermique d'éclairage selon la revendication 1, comporte par ailleurs :

   un déflecteur, ledit déflecteur entoure le dissipateur de chaleur et est configuré de sorte à utiliser un différentiel de température afin de faciliter le transfert de chaleur par convection vers l'extérieur du dissipateur de chaleur.

4. Le système de gestion thermique d'éclairage selon la revendication 1, dont chaque extrusion comporte plusieurs ailettes à chaleur ;
   la pluralité desdites ailettes à chaleur est faite de matériau dont la conductivité thermique est d'au moins 180 W/m-K ;
   chacune desdites ailettes à chaleur comporte une courbure spécifiée non zéro ; et
   la pluralité des ailettes à chaleur forme une pluralité de canaux de débits d'air pour dissiper la chaleur par convection.

5. Le système de gestion thermique d'éclairage selon la revendication 1, comporte par ailleurs un dispositif de refroidissement actif couplé avec, ou compris dans, le module d'éclairage remplaçable ; ledit dispositif de refroidissement actif comporte un ou plusieurs des éléments suivants :

   un refroidisseur thermoélectrique ;
   un dispositif de changement de phase ;
   un ventilateur ;
   un ventilateur piézoélectrique ;
   un ventilateur à oscillation rapide basé sur un enroulement de voix ;
   un refroidisseur à jet synthétique ; ou
   un refroidisseur à entrainement acoustique.

6. Le système de gestion thermique d'éclairage (100) selon la revendication 1 comporte par ailleurs :

   un élément de refroidissement passif couplé avec, ou compris dans, le module d'éclairage remplaçable, ledit élément de refroidissement passif comporte un ou plusieurs des éléments suivants :

      un caloduc ;
      un dispositif à effet Venturi ; ou
      un dispositif à écoulement convectif.

7. Le système de gestion thermique d'éclairage selon la revendication 1, comporte par ailleurs :

   au moins un capteur, couplé, ou compris, avec le module d'éclairage remplaçable ou avec le dissipateur de chaleur, dont au moins un capteur est configuré pour être couplé avec un système de commande automatisé câblé, ou sans fil, pour réguler la couleur, l'intensité lumineuse ou la température du module d'éclairage remplaçable grâce audit système de commande automatisé.

8. Le système de gestion thermique d'éclairage (100) selon la revendication 1 comporte par ailleurs :

   un ou plusieurs éléments optiques de conditionnement de faisceau proches d'un ou de plusieurs éléments d'éclairage par semi-conducteurs, dont au moins un des éléments optiques de conditionnement de faisceau est configuré pour transformer spectralement la luminosité de l'un ou de plusieurs éléments d'éclairage par semi-conducteurs en absorbant les photons par une première distribution spectrale et en émettant des photons par une seconde distribution spectrale.

9. Le système de gestion thermique d'éclairage selon la revendication 8, dont au moins un ou plusieurs des éléments optiques de conditionnement de faisceau comportent un ou plusieurs des matériaux suivants :

   un matériau phosphore ;
   un matériau nanophotonique ;
   un matériau cristallin photonique ;
   un matériau en fibre optique ;
   un matériau en fibre de cristal photonique ;
   un matériau à microstructure technique ; ou
   un matériau diélectrique de guide d'ondes.

10. Le système de gestion thermique d'éclairage selon la revendication 8 comporte par ailleurs :

un ou plusieurs capteurs proches d'un ou de plusieurs éléments optiques de conditionnement de faisceau ; et

un ensemble de circuits électroniques de commande couplé à un ou à plusieurs capteurs, ledit ensemble de circuits de commande est configuré pour :

surveiller la distribution spectrale ou l'intensité de la distribution de luminosité spectralement transformée d'un ou de plusieurs éléments d'éclairage par semi-conducteurs par un ou plusieurs capteurs ; et

modifier au moins un ou plusieurs des éléments optiques de conditionnement de faisceau afin de contrôler la température de la couleur ou l'intensité de la distribution du faisceau.

11. Le système de gestion thermique d'éclairage selon la revendication 8, dont un ou plusieurs éléments d'éclairage par semi-conducteurs comprennent une pluralité d'éléments d'éclairage par semi-conducteurs, dont au moins deux éléments d'éclairage par semi-conducteurs comportent respectivement une sortie spectrale spécifiée et dont au moins un de plusieurs éléments optiques de conditionnement de faisceau est configuré pour homogénéiser la lumière de sortie de la pluralité des éléments d'éclairage par semi-conducteurs.

12. Le système de gestion thermique d'éclairage selon la revendication 1 comporte par ailleurs :

un ou plusieurs capteurs couplés, ou intégrés, dans le module d'éclairage remplaçable, dont un ou plusieurs capteurs sont configurés pour mesurer un ou plusieurs attributs du module d'éclairage remplaçable ou de son environnement ;

un circuit de commande, couplé avec le module d'éclairage remplaçable, dont l'ensemble des circuits électroniques de commande est configuré pour :

surveiller un ou plusieurs attributs afin de déterminer l'état du système de gestion thermique d'éclairage grâce à un ou plusieurs capteurs, lequel état du système peut être utilisé pour réguler le système d'éclairage réglable ou pour commander un système couplé au système d'éclairage réglable.

13. Le système de gestion thermique d'éclairage selon la revendication 12, dont l'ensemble des circuits électroniques de commande est configuré pour être couplé à un système de commande automatisé afin de commander ou de surveiller le système d'éclairage réglable.

14. Le système de gestion thermique d'éclairage selon la revendication 12, qui comporte par ailleurs un ou plusieurs des accessoires suivants :

une caméra vidéo ;
un appareil photo ;
un détecteur de mouvement ;
un détecteur de fumée ;
un capteur chimique ; ou
un détecteur de monoxyde de carbone.

15. Une méthode comprenant :

a mise à disposition d'un dispositif d'éclairage, lequel comporte :

un premier module d'éclairage remplaçable, comportant :

un ou plusieurs éléments d'éclairage par semi-conducteurs ;
une carte de circuit imprimé connectée électriquement et thermiquement à un ou plusieurs éléments d'éclairage par semi-conducteurs ; ladite carte de circuit imprimé est connectée à, ou est comprise avec, un élément de diffusion thermique ;
un couvercle fixé sur la carte de circuit imprimé, lequel protège un ou plusieurs éléments d'éclairage par semi-conducteurs et la carte de circuit imprimé d'intrusions environnementales ;
un module de base, comportant :

un dissipateur de chaleur connecté thermiquement au premier module d'éclairage remplaçable par l'élément de diffusion de chaleur ; ledit dissipateur de chaleur dissipe la chaleur générée par un ou plusieurs éléments d'éclairage par semi-conducteurs pendant le fonctionnement ; ledit dissipateur de chaleur comprend une pluralité d'extrusions empilées, chacune desdites extrusions empilées ayant un radius respectif et la pluralité des extrusions empilées sont ordonnées en escalier selon leur radius respectif pour donner au dissipateur de chaleur une forme pyramidale tronquée;
un assemblage de l'arbre et du connecteur de base, comportant :

un connecteur de base, couplé mécaniquement au, mais isolé électriquement du dissipateur de chaleur ; ledit connecteur de base est configuré pour recevoir le courant d'une prise d'éclairage pendant le fonctionnement ;

un arbre ;

un adaptateur de base, ledit adaptateur de base permet de coupler le connecteur de base à l'arbre, et un module de base de circuits électroniques qui comprend un ou plusieurs des éléments su iva nts :

des circuits électroniques de conditionnement de l'énergie ; ou
des circuits électroniques de commande ;

dont ledit dissipateur de chaleur est couplé avec l'assemblage de l'arbre et du connecteur de base par ajustement serré ;

le retrait du premier module d'éclairage remplaçable du système d'éclairage, et la dissociation du premier module d'éclairage remplaçable du module de base ;

l'installation d'un second module d'éclairage remplaçable dans le système d'éclairage, et la fixation du second module d'éclairage remplaçable sur le module de base, une fois que ledit second module de base est installé, le dispositif d'éclairage est configuré pour produire un éclairage en utilisant le second module d'éclairage remplaçable.

*FIG. 1*

*FIG. 2*

**FIG. 3**

**FIG. 4**

**FIG. 5**

FIG. 6

FIG. 7

FIG. 8

FIG. 9

FIG. 10

FIG. 11

*80*

*100*

*82*

FIG. 12

*80*

*88*

*86*

*20*

*26*

FIG. 13

FIG. 14

FIG. 15

110

FIG. 16

10    120

122    44

FIG. 17

130

FIG. 18

140    142

FIG. 19

FIG. 20

FIG. 21

*300*

Lamp m.n    *302*

Data Processing
Driver Circuit    *304*

Sensing
Device
*306*

Illumination
Module
*10*

## FIG. 22

provide a lighting device, including a first
replaceable illumination module and a base
module, where the base module includes a
heat sink
2302

remove a first replaceable illumination module
from the lighting device, including detaching
the first replaceable illumination module from
the base module
2304

install a second replaceable illumination
module in the lighting device, including
attaching the second replacement illumination
module to the base module
2306

## FIG. 23

```
┌─────────────────────────────────────────┐
│ receive power to an electrical connector of a │
│     replaceable illumination module       │
│                 2402                      │
└─────────────────────────────────────────┘
                     │
                     ▼
┌─────────────────────────────────────────┐
│ provide power to a printed circuit board of the │
│     replaceable illumination module       │
│                 2404                      │
└─────────────────────────────────────────┘
                     │
                     ▼
┌─────────────────────────────────────────┐
│  provide power via the printed circuit board to │
│   one or more solid state lighting elements │
│                 2406                      │
└─────────────────────────────────────────┘
                     │
                     ▼
┌─────────────────────────────────────────┐
│    emitt light via the one or more solid state │
│            lighting elements              │
│                 2408                      │
└─────────────────────────────────────────┘
                     │
                     ▼
┌─────────────────────────────────────────┐
│ transform at least a portion of the emitted light │
│    from the one or more solid state lighting │
│               elements                    │
│                 2410                      │
└─────────────────────────────────────────┘
                     │
                     ▼
┌─────────────────────────────────────────┐
│ conduct heat from the one or more solid state │
│      lighting elements to a heat sink     │
│                 2412                      │
└─────────────────────────────────────────┘
```

*FIG. 24*

provide a controllable lighting system, including one or more solid state lighting elements, a printed circuit board, and a thermal spreading element, one or more sensors coupled to or included in the replaceable illumination module, and control circuitry coupled to or included in the replaceable illumination module
2502

monitor, via the one or more sensors and the control circuitry, one or more attributes of the replaceable illumination module or its environment to determine a status
2504

regulate the controllable lighting system or control a system coupled to the controllable lighting system based on the determined status
2506

*FIG. 25*

provide power to a lighting system, where the lighting system includes one or more solid state lighting elements and one or more beam conditioning optical elements
2602

spectrally transform light from the one or more solid state lighting elements via at least one of the beam conditioning optical elements by absorbing photons with a first spectral distribution and emitting photons with a second spectral distribution
2604

*FIG. 26*

provide an extrusion die that is controllable to dynamically vary one or more cross sectional attributes of a work piece during extrusion
2702

extrude a material via the extrusion die to generate the work piece, including dynamically controlling the extrusion die to vary at least one cross sectional attribute of the work piece during extrusion
2704

*FIG. 27*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 20090097249 A